# EUROPEAN PATENT APPLICATION

(11) **EP 4 827 034 A1**
(43) Date of publication of application: **21.10.2026**
(21) Application number: 24911587.4
(22) Date of filing: 28.12.2024
(51) Int. Cl.: H04L 5/00, H04W 24/02

(54) **SENSING COMMUNICATION METHOD AND APPARATUS**

(30) Priority: 29.12.2023 CN 202311868082
(71) Applicant: Huawei Technologies Co., Ltd., Shenzhen, Guangdong 518129 (CN)
(72) Inventor: DU, Rui, Shenzhen, Guangdong 518129 (CN); NAREN, Gerile, Shenzhen, Guangdong 518129 (CN); TANG, Zhuqing, Shenzhen, Guangdong 518129 (CN); HUANG, Lei, Shenzhen, Guangdong 518129 (CN)
(74) Representative: Isarpatent
(86) International application number: PCT/CN2024/143511
(87) International publication number: WO 2025/140673

(57) **Abstract**

A sensing communication method and apparatus are provided and are applied to the field of communication technologies. This application may be applied to the IEEE 802.11 series protocols such as the 802.11bf protocol, the 802.11ax next-generation Wi-Fi protocol, the IEEE 802.11be next-generation Wi-Fi protocol, Wi-Fi AI, millimeter wave (mmWave), or ultra-wideband (UWB). A sensing initiator sends a sensing measurement request frame, a sensing responder receives the sensing measurement request frame and sends a sensing measurement response frame, and the sensing initiator receives the sensing measurement response frame. The sensing measurement request frame may include monostatic indication information, sensing transmitter indication information, and sensing receiver indication information. For example, the monostatic indication information may indicate whether the sensing responder may perform monostatic sensing. This method introduces monostatic sensing in a sensing process, which can improve sensing performance.

## Description

This application claims priority to Chinese Patent Application No. 202311868082.7, filed with the China National Intellectual Property Administration on December 29, 2023 and entitled "SENSING COMMUNICATION METHOD AND APPARATUS", which is incorporated herein by reference in its entirety.

### TECHNICAL FIELD

This application relates to the field of communication technologies, and in particular, to a sensing communication method and apparatus.

### BACKGROUND

Institute of electrical and electronics engineers (institute of electrical and electronics engineers, IEEE) 802.11bf is a next-generation wireless standard that focuses on sensing of passive objects (for example, a target does not carry any device). The 802.11bf standard includes two major standards: a low frequency standard (for example, lower than 7 gigahertz (sub-7 GHz), and implemented mainly based on 802.11ac, 802.11ax, 802.11be, 802.11bn, a next-generation standard, and the like), and a high frequency standard (for example, higher than or equal to 60 GHz, and implemented mainly based on 802.11ad, 802.11ay, a next-generation standard, and the like).

In the 802.11bf standard, one sensing apparatus sends a sensing signal and another sensing apparatus receives the sensing signal, to perform sensing measurement, for example, estimate channel state information (channel state information, CSI).

Therefore, how to improve sensing performance needs to be urgently resolved.

### SUMMARY

Embodiments of this application provide a sensing communication method and apparatus. Monostatic sensing is introduced in a sensing process, which not only enriches a sensing procedure, but also may improve sensing performance.

According to a first aspect, an embodiment of this application provides a sensing communication method. The method is applied to a sensing initiator (sensing initiator), and the sensing initiator may include a sensing device, or a chip, a functional module, or the like disposed in the sensing device, and the method includes:
sending a sensing measurement request (sensing measurement request) frame, where the sensing measurement request frame includes a sensing measurement parameters element (sensing measurement parameters element), the sensing measurement parameters element includes monostatic indication information, sensing transmitter indication information, and sensing receiver indication information, the monostatic indication information indicates whether a sensing responder performs monostatic sensing (monostatic sensing), the sensing transmitter indication information indicates whether the sensing responder is a sensing transmitter (sensing transmitter), and the sensing receiver indication information indicates whether the sensing responder is a sensing receiver (sensing receiver); and receiving a sensing measurement response (sensing measurement response) frame of the sensing measurement request frame.

In an example, the sensing initiator may include an access point (access point, AP), and the sensing responder may include a station (station, STA). For example, for a trigger based (trigger based, TB) sensing measurement exchange (TB sensing measurement exchange), the sensing initiator may be an AP, and the sensing responder may be a STA. In another example, the sensing initiator may include a STA, and the sensing responder may include an AP. For example, for a non-trigger based (non-trigger based, Non-TB) sensing measurement exchange (Non-TB sensing measurement exchange), the sensing initiator may be a STA, and the sensing responder may be an AP.

In this embodiment of this application, the monostatic indication information is added in the sensing measurement request frame, and the sensing initiator may assign more role types to the sensing responder, so that the sensing responder can support a sensing procedure of monostatic sensing, thereby further enriching a procedure of a sensing measurement session. In addition, monostatic sensing is used. Because a sensing physical layer convergence procedure (physical layer convergence procedure, PLCP) protocol data unit (PHY protocol data unit, PPDU) is sent and received by a same sensing device, the sensing PPDU is not affected by an error such as a carrier frequency offset or a sampling frequency offset, thereby improving accuracy of a sensing measurement result and improving sensing performance.

In a possible implementation, if the sensing transmitter indication information indicates that the sensing responder is a sensing transmitter, when a value of the monostatic indication information is a first value, it indicates that the sensing responder performs monostatic sensing, or when a value of the monostatic indication information is a second value, it indicates that the sensing responder does not perform monostatic sensing.

For example, the sensing responder is a sensing transmitter, and the sensing responder may perform monostatic sensing. For example, in different sensing measurement exchanges of a sensing measurement session, the sensing responder may separately be a sensing transmitter and perform a monostatic sensing. For another example, in different phases of a measurement exchange, the sensing responder may separately be a sensing transmitter and perform monostatic sensing. For another example, in a same phase of a sensing measurement exchange, the sensing responder may separately be a sensing transmitter and perform monostatic sensing.

For example, the first value may be 1, and the second value may be 0.

In this embodiment of this application, when serving as a sensing transmitter, the sensing responder may perform monostatic sensing. Therefore, the sensing transmitter may send the sensing PPDU, so that the sensing receiver receives the sensing PPDU and performs sensing measurement. In addition, the sensing transmitter may also receive the sensing PPDU to perform channel measurement, so that sensing measurement efficiency is higher.

In a possible implementation, if the sensing receiver indication information indicates that the sensing responder is a sensing receiver, when a value of the monostatic indication information is a first value, it indicates that the sensing responder performs monostatic sensing, or when a value of the monostatic indication information is a second value, it indicates that the sensing responder does not perform monostatic sensing.

In this embodiment of this application, when serving as a sensing receiver, the sensing responder may perform monostatic sensing. The sensing receiver is allowed to perform monostatic sensing, which can improve a measurement diversity gain.

In a possible implementation, the sensing measurement request frame further includes a sensing comeback information (sensing comeback info) field, and the sensing comeback information field may indicate an unassociated STA to resend a sensing measurement query (sensing measurement query) frame within a specified time.

For example, the specified time may be after a time indicated by an unassociated STA comeback after exponent (unassociated STA comeback after exponent) field in the sensing comeback information field and before a time indicated by an unassociated STA comeback before exponent (unassociated STA comeback before exponent) field in the sensing comeback information field.

In a possible implementation, after the sending the sensing measurement request frame, the method further includes: sending a sensing null data packet announcement NDPA frame. The sensing NDPA frame includes sounding indication information, and the sounding indication information indicates whether the sensing responder needs to receive a sensing physical layer convergence procedure (physical layer convergence procedure, PLCP) protocol data unit (PHY protocol data unit, PPDU), or the sounding indication information indicates whether the sensing responder needs to estimate channel state information (channel state information, CSI), or the sounding indication information indicates whether the sensing responder needs to report channel state information CSI.

For example, the sounding indication information may indicate whether the sensing responder performs at least one of the following in a phase corresponding to the sensing NDPA frame: receiving the sensing PPDU, estimating the CSI, buffering the CSI (or storing the CSI), or reporting the CSI. In an example, in the TB measurement exchange, the AP may send the sensing NDPA frame to the STA. In another example, in the non-TB measurement exchange, the STA may send the sensing NDPA frame to the AP. For example, the sounding indication information may indicate whether the sensing responder performs at least one of the following: receiving the sensing PPDU, estimating the CSI, buffering the CSI, and reporting the CSI. For example, if a value of the sounding indication information is a value #1, it may indicate that the sensing responder does not need to receive the sensing PPDU; or it may indicate that the sensing responder does not estimate the CSI (for example, the sensing responder may receive the sensing PPDU, but does not estimate the CSI); or it may indicate that the sensing responder does not buffer the CSI (for example, the sensing responder may receive the sensing PPDU, and estimate the CSI, but does not buffer the CSI); or it may indicate that the sensing responder does not report the CSI (for example, the sensing responder may receive the sensing PPDU, estimate the CSI, and buffer the CSI, but does not report the CSI); or it may indicate that the sensing responder does not report the CSI in a current sensing measurement exchange. For another example, if a value of the sounding indication information is a value #2, it may indicate that the sensing responder needs to receive the sensing PPDU, or estimate the CSI, or buffer the CSI, or report the CSI. The value #1 and the value #2 shown herein are used to distinguish between different values. A specific value is not limited in this embodiment of this application.

For example, the sounding indication information may be carried in STA information (STA Info) in the sensing NDPA frame.

In this embodiment of this application, the sensing initiator indicates, by using the sensing NDPA frame, a behavior such as whether the sensing responder receives the sensing PPDU. For example, the sensing responder may alternatively not receive the sensing PPDU, or the like, thereby saving resources and reducing power consumption.

In a possible implementation, the sensing NDPA frame further includes the monostatic indication information.

For example, for the non-TB measurement exchange, the STA may indicate, by using the sensing NDPA frame, whether the AP performs monostatic sensing. For example, for the non-TB measurement exchange, the sensing NDPA frame may include at least one of the sounding indication information or the monostatic indication information.

In a possible implementation, after the sending the sensing measurement request frame, the method further includes: sending a sounding trigger frame. The sensing sounding trigger frame includes the monostatic indication information.

For example, the sensing sounding trigger frame may include at least one of a sensing responder to sensing initiator (sensing responder to sensing initiator, SR2SI) sounding trigger frame (SR2SI sounding trigger frame), a sensing responder to sensing responder (sensing responder to sensing responder, SR2SR) sounding trigger frame (SR2SR sounding trigger frame), or an SI2SR sounding trigger frame.

In a possible implementation, a user information (user info) field in the sensing sounding trigger frame includes the monostatic indication information; or a common information (common info) field in the sensing sounding trigger frame includes the monostatic indication information, the common information field further includes a measurement session identifier ID, and the measurement session ID indicates a sensing measurement session corresponding to monostatic sensing performed by the sensing responder; or a transmitter user information field or a receiver user information field in the sensing sounding trigger frame includes the monostatic indication information.

In an example, in the SR2SI sounding trigger frame, a user information field may include the monostatic indication information, or a common information field includes the monostatic indication information. For example, a value of a sensing trigger subtype field in the SR2SI sounding trigger frame is 1. In another example, in the SR2SR sounding trigger frame, at least one of a transmitter user information (transmitter user info) field or a receiver user information (receiver user info) field includes the monostatic indication information, or a common information field includes the monostatic indication information. For example, a value of a sensing trigger subtype field in the SR2SR sounding trigger frame is 4.

In this embodiment of this application, the user information field carries the monostatic indication information, so that the sensing initiator can flexibly schedule a sensing responder corresponding to the user information field to perform monostatic sensing. The common information field carries the monostatic indication information, so that the sensing initiator can indicate all sensing responders to perform monostatic sensing, or indicate all sensing responders not to perform monostatic sensing, thereby reducing signaling overheads and efficiently managing behaviors of all sensing responders.

In a possible implementation, after the sending the sensing measurement request frame, the method further includes: sending a sensing sounding trigger frame. The sensing sounding trigger frame is used to schedule each of a plurality of sensing responders participating in a sensing measurement exchange to perform monostatic sensing.

In this embodiment of this application, the sounding trigger frame used for monostatic sensing is added, so that the sensing initiator can schedule all devices participating in sensing to perform monostatic sensing. This is easy to implement, and monostatic sensing can improve sensing performance.

In a possible implementation, the sensing sounding trigger frame includes a sensing trigger subtype field, and a value of the sensing trigger subtype field is 5.

For example, the value of the sensing trigger subtype field may alternatively be any value in 6 to 15.

In a possible implementation, before the sending the sensing measurement request frame, the method further includes: sending first capability indication information, where the first capability indication information indicates whether the sensing initiator supports monostatic sensing; and receiving second capability indication information, where the second capability indication information indicates whether the sensing responder supports monostatic sensing.

For example, the first capability indication information is carried in a first sensing capabilities element, and the second capability indication information is carried in a second sensing capabilities element.

In this embodiment of this application, a sensing apparatus exchanges, in a capabilities exchange phase, whether the sensing apparatus supports monostatic sensing, so that a peer sensing apparatus can learn of more capabilities of the foregoing sensing apparatus, thereby improving communication efficiency.

In a possible implementation, the sensing initiator includes an access point AP, and before the sending the sensing measurement request frame, the method further includes: receiving a sensing by proxy (sensing by proxy, SBP) SBP request frame. The SBP request frame includes the monostatic indication information.

In this embodiment of this application, the monostatic indication information is added in the SBP request frame, so that the SBP initiator can recommend a role of a sensing responder to an SBP responder. The SBP responder shown herein may serve as a sensing initiator to send the sensing measurement request frame to the sensing responder. For example, the role assigned by the sensing initiator to the sensing responder in the sensing measurement request frame may be determined by the sensing initiator based on the role recommended by the SBP initiator to the sensing responder.

In a possible implementation, the SBP request frame includes an SBP parameters element, the SBP parameters element includes a sensing responder role bitmap, a first bit in the sensing responder bitmap indicates whether the sensing responder is a sensing transmitter, a second bit in the sensing responder role bitmap indicates whether the sensing responder is a sensing receiver, and a third bit in the sensing role bitmap indicates whether the sensing responder performs monostatic sensing.

In a possible implementation, the method further includes: sending a first NDP, where a signaling (signaling, SIG) field of the first NDP includes NDP indication information, and the NDP indication information indicates whether the first NDP is an NDP used for monostatic sensing; or receiving a second NDP, where a signaling SIG field of the second NDP includes NDP indication information, and the NDP indication information indicates whether the second NDP is an NDP used for monostatic sensing.

In this embodiment of this application, when the NDP indication information indicates that an NDP is used for monostatic sensing, a receiver of the NDP may learn that the NDP is an NDP used by a transmitter of the NDP for monostatic sensing. Therefore, the receiver may not continue to receive information after the NDP indication information, thereby saving resources, reducing power consumption, and implementing energy saving.

According to a second aspect, an embodiment of this application provides a sensing communication method. The method is applied to a sensing responder, and the sensing responder may include a sensing device, or a chip, a functional module, or the like disposed in the sensing device, and the method includes:

receiving a sensing measurement request frame, where the sensing measurement request frame includes a sensing measurement parameters element, the sensing measurement parameters element includes monostatic indication information, sensing transmitter indication information, and sensing receiver indication information, the monostatic indication information indicates whether the sensing responder performs monostatic sensing, the sensing transmitter indication information indicates whether the sensing responder is a sensing transmitter, and the sensing receiver indication information indicates whether the sensing responder is a sensing receiver; and sending a sensing response frame of the sensing request frame.

In a possible implementation, if the sensing transmitter indication information indicates that the sensing responder is a sensing transmitter, when a value of the monostatic indication information is a first value, it indicates that the sensing responder performs monostatic sensing, or when a value of the monostatic indication information is a second value, it indicates that the sensing responder does not perform monostatic sensing.

In a possible implementation, if the sensing receiver indication information indicates that the sensing responder is a sensing receiver, when a value of the monostatic indication information is a first value, it indicates that the sensing responder performs monostatic sensing, or when a value of the monostatic indication information is a second value, it indicates that the sensing responder does not perform monostatic sensing.

In a possible implementation, that the sensing responder performs monostatic sensing includes: sending, by the sensing responder, a sensing physical layer convergence procedure protocol data unit PPDU, and receiving a reflected signal of the sensing PPDU; and estimating channel state information CSI based on the reflected signal.

In a possible implementation, after the receiving the sensing measurement request frame, the method further includes: receiving a sensing null data packet announcement NDPA frame. The sensing NDPA frame includes sounding indication information, and the sounding indication information indicates whether the sensing responder needs to receive the sensing physical layer convergence procedure protocol data unit PPDU, or the sounding indication information indicates whether the sensing responder needs to estimate the channel state information CSI, or the sounding indication information indicates whether the sensing responder needs to report the channel state information CSI.

In a possible implementation, the sensing NDPA frame further includes the monostatic indication information.

In a possible implementation, after the receiving the sensing measurement request frame, the method further includes: receiving a sensing sounding trigger frame. The sensing sounding trigger frame includes the monostatic indication information.

In a possible implementation, a user information field in the sensing sounding trigger frame includes the monostatic indication information; or a common information field in the sensing sounding trigger frame includes the monostatic indication information, the common information field further includes a measurement session identifier ID, and the measurement session ID indicates a sensing measurement session corresponding to monostatic sensing performed by the sensing responder; or a transmitter user information field or a receiver user information field in the sensing sounding trigger frame includes the monostatic indication information.

In a possible implementation, after the receiving the sensing measurement request frame, the method further includes: receiving a sensing sounding trigger frame. The sensing sounding trigger frame is used to schedule each of a plurality of sensing responders participating in a sensing measurement exchange to perform monostatic sensing.

In a possible implementation, the sensing sounding trigger frame includes a sensing trigger subtype field, and a value of the sensing trigger subtype field is 5.

In a possible implementation, before the receiving the sensing measurement request frame, the method further includes: receiving first capability indication information, where the first capability indication information indicates whether a sensing initiator supports monostatic sensing; and sending second capability indication information, where the second capability indication information indicates whether the sensing responder supports monostatic sensing.

In a possible implementation, the sensing responder includes a station STA, and before the receiving the sensing measurement request frame, the method further includes: sending a sensing by proxy SBP request frame. The SBP request frame includes the monostatic indication information.

In a possible implementation, the SBP request frame includes an SBP parameters element, the SBP parameters element includes a sensing responder role bitmap, a first bit in the sensing responder bitmap indicates whether the sensing responder is a sensing transmitter, a second bit in the sensing responder role bitmap indicates whether the sensing responder is a sensing receiver, and a third bit in the sensing role bitmap indicates whether the sensing responder performs monostatic sensing.

In a possible implementation, the method further includes: receiving a first NDP, where a signaling SIG field of the first NDP includes NDP indication information, and the NDP indication information indicates whether the first NDP is an NDP used for monostatic sensing; or sending a second NDP, where a signaling SIG field of the second NDP includes NDP indication information, and the NDP indication information indicates whether the second NDP is an NDP used for monostatic sensing.

For other descriptions of the second aspect, refer to the first aspect. Details are not described herein again.

According to a third aspect, an embodiment of this application provides a sensing initiator, configured to perform the method according to any one of the first aspect or the possible implementations. The sensing initiator includes a module that performs the method according to any one of the first aspect or the possible implementations.

According to a fourth aspect, an embodiment of this application provides a sensing responder, configured to perform the method according to any one of the second aspect or the possible implementations. The sensing responder includes a module that performs the method according to any one of the second aspect or the possible implementations.

According to a fifth aspect, an embodiment of this application provides a sensing initiator. The sensing initiator includes a processor, configured to perform the method shown in any one of the first aspect or the possible implementations. The processor is configured to execute a program stored in a memory. When the program is executed, the method according to any one of the first aspect or the possible implementations is performed.

In a possible implementation, the memory is located outside the sensing initiator.

In a possible implementation, the memory is located inside the sensing initiator.

In this embodiment of this application, the processor and the memory may alternatively be integrated into one device. In other words, the processor and the memory may alternatively be integrated together. For example, the sensing initiator may be a chip.

In a possible implementation, the sensing initiator further includes a transceiver. The transceiver is configured to receive information or send information.

According to a sixth aspect, an embodiment of this application provides a sensing responder. The sensing responder includes a processor, configured to perform the method shown in any one of the second aspect or the possible implementations. The processor is configured to execute a program stored in a memory. When the program is executed, the method according to any one of the second aspect or the possible implementations is performed.

In a possible implementation, the memory is located outside the sensing responder.

In a possible implementation, the memory is located inside the sensing responder.

In this embodiment of this application, the processor and the memory may alternatively be integrated into one device. In other words, the processor and the memory may alternatively be integrated together. For example, the sensing responder may be a chip.

In a possible implementation, the sensing responder further includes a transceiver. The transceiver is configured to receive information or send information.

According to a seventh aspect, an embodiment of this application provides a sensing initiator. The sensing initiator includes a logic circuit and an interface. The logic circuit is coupled to the interface. The interface is configured to input and/or output information. The logic circuit is configured to perform the method according to any one of the first aspect or the possible implementations.

According to an eighth aspect, an embodiment of this application provides a sensing responder. The sensing responder includes a logic circuit and an interface. The logic circuit is coupled to the interface. The interface is configured to input and/or output information. The logic circuit is configured to perform the method according to any one of the second aspect or the possible implementations.

According to a ninth aspect, an embodiment of this application provides a computer-readable storage medium. The computer-readable storage medium is configured to store a computer program, and when the computer program is run on a computer, the method according to any one of the first aspect, the second aspect, or the possible implementations of the first aspect and the second aspect is performed.

According to a tenth aspect, an embodiment of this application provides a computer program product. When the computer program product is run on a computer, the method according to any one of the first aspect, the second aspect, or the possible implementations of the first aspect and the second aspect is performed.

According to an eleventh aspect, an embodiment of this application provides a computer program. When the computer program is run on a computer, the method according to any one of the first aspect, the second aspect, or the possible implementations of the first aspect and the second aspect is performed.

According to a twelfth aspect, an embodiment of this application provides a communication system. The communication system includes a sensing initiator and/or a sensing responder. The sensing initiator is configured to perform the method according to any one of the first aspect or the possible implementations of the first aspect, and the sensing responder is configured to perform the method according to any one of the second aspect or the possible implementations of the second aspect.

### BRIEF DESCRIPTION OF DRAWINGS

FIG. 1a is a diagram of an architecture of a communication system according to an embodiment of this application;
FIG. 1b is a diagram of a format of a sensing PPDU according to an embodiment of this application;
FIG. 1c is a diagram of a format of another sensing PPDU according to an embodiment of this application;
FIG. 1d is a diagram of a format of still another sensing PPDU according to an embodiment of this application;
FIG. 1e is a diagram of a format of yet another sensing PPDU according to an embodiment of this application;
FIG. 2 is a diagram of phases of a sensing procedure according to an embodiment of this application;
FIG. 3a is a schematic flowchart of a TB sensing measurement exchange according to an embodiment of this application;
FIG. 3b is a schematic flowchart of a non-TB sensing measurement exchange according to an embodiment of this application;
FIG. 4 is a diagram of an SBP procedure according to an embodiment of this application;
FIG. 5a is a schematic flowchart of a sensing communication method according to an embodiment of this application;
FIG. 5b is a diagram of a format of a sensing capabilities element according to an embodiment of this application;
FIG. 5c is a diagram of a format of a sensing field in a sensing capabilities element according to an embodiment of this application;
FIG. 6a is a schematic flowchart of a sensing communication method according to an embodiment of this application;
FIG. 6b is a diagram of a format of a sensing measurement request frame according to an embodiment of this application;
FIG. 6c is a diagram of a format of a sensing measurement response frame according to an embodiment of this application;
FIG. 7a is a schematic flowchart of a sensing communication method according to an embodiment of this application;
FIG. 7b is a diagram of a format of a STA information field of a sensing NDPA frame according to an embodiment of this application;
FIG. 8a is a schematic flowchart of a sensing communication method according to an embodiment of this application;
FIG. 8b is a diagram of a format of a user information field of a sensing sounding trigger frame according to an embodiment of this application;
FIG. 8c is a diagram of a format of a common information field of a sensing sounding trigger frame according to an embodiment of this application;
FIG. 8d is a schematic flowchart of a TB sensing measurement exchange according to an embodiment of this application;
FIG. 8e is a diagram of a format of a sensing sounding trigger frame according to an embodiment of this application;
FIG. 9a is a schematic flowchart of a TB sensing measurement exchange according to an embodiment of this application;
FIG. 9b is a diagram of a format of a transmitter user information field of a sensing sounding trigger frame according to an embodiment of this application;
FIG. 9c is a diagram of a format of a receiver user information field of a sensing sounding trigger frame according to an embodiment of this application;
FIG. 9d is a diagram of a format of a common information field of a sensing sounding trigger frame according to an embodiment of this application;
FIG. 10a is a diagram of a format of a common information field of a sensing sounding trigger frame according to an embodiment of this application;
FIG. 10b is a diagram of a format of a user information field of a sensing sounding trigger frame according to an embodiment of this application;
FIG. 10c is a diagram of a process of a TB measurement exchange according to an embodiment of this application;
FIG. 11a is a diagram of a non-TB measurement exchange according to an embodiment of this application;
FIG. 11b is a diagram of a format of a STA information field of a sensing NDPA frame according to an embodiment of this application;
FIG. 12 is a diagram of a structure of a communication apparatus according to an embodiment of this application;
FIG. 13 is a diagram of a structure of a communication apparatus according to an embodiment of this application; and
FIG. 14 is a diagram of a structure of a communication apparatus according to an embodiment of this application.

### DESCRIPTION OF EMBODIMENTS

For ease of understanding technical solutions in this application, the following further describes this application with reference to accompanying drawings.

Terms "first", "second", and the like in the specification, claims, and accompanying drawings of this application are merely used to distinguish between different objects, and are not used to describe a specific order. In addition, terms such as "include" and "have" and any other variants thereof are intended to cover a non-exclusive inclusion. For example, processes, methods, systems, products, or devices that include a series of steps or units are not limited to listed steps or units, but instead, optionally further include steps or units that are not listed, or optionally further include other steps or units inherent to these processes, methods, products, or devices.

"Embodiments" mentioned herein mean that specific features, structures, or characteristics described in combination with the embodiments may be included in at least one embodiment of this application. The phrase shown in various locations in the specification may not necessarily refer to a same embodiment, and is not an independent or optional embodiment exclusive from another embodiment. It may be understood explicitly and implicitly by a person skilled in the art that the embodiments described herein may be combined with other embodiments.

In this application, "at least one (item)" means one or more, "a plurality of" means two or more, "at least two (items)" means two or three or more, and "and/or" is used to describe an association relationship between associated objects, which indicates that three relationships may exist. For example, "A and/or B" may indicate: only A exists, only B exists, and both A and B exist. A and B may be singular or plural. "Or" represents that two relationships may exist, for example, only A exists, and only B exists. When A and B are mutually exclusive, it may also represent that three relationships exist, for example, only A exists, only B exists, and both A and B exist. The character "/" generally indicates an "or" relationship between the associated objects. "At least one of the following" or a similar expression thereof means any combination of these items. For example, at least one of a, b, or c may represent: a, b, c, "a and b", "a and c", "b and c", or "a, b, and c".

In this application, the "indication" may include a direct indication, an indirect indication, an explicit indication, and an implicit indication. When a piece of indication information is described as indicating A, it may be understood that the indication information carries A, directly indicates A, or indirectly indicates A.

In this application, information indicated by the indication information is referred to as to-be-indicated information. In a specific implementation process, there are many manners of indicating the to-be-indicated information. For example, the manners include but are not limited to a manner in which the to-be-indicated information, for example, the to-be-indicated information or an index of the to-be-indicated information, may be directly indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent. In addition, the to-be-indicated information may be sent as a whole, or may be divided into a plurality of pieces of sub-information for separate sending. In addition, sending periods and/or sending occasions of the sub-information may be the same or may be different.

In this application, "sending" and "receiving" indicate signal transmission directions. For example, "sending information to XX" may be understood as that a destination end of the information is XX, and may include direct sending through an air interface, or include indirect sending through an air interface by another unit or module. "Receiving information from YY" may be understood as that a source end of the information is YY, and may include direct receiving from YY through an air interface, or may include indirect receiving from YY through an air interface from another unit or module. The "sending" may alternatively be understood as "output" of a chip interface, and the "receiving" may alternatively be understood as "input" into the chip interface. In other words, sending and receiving may be performed between devices, for example, between a network device and a terminal device, or may be performed within a device. For example, sending or receiving is performed between components, modules, chips, software modules, or hardware modules in a device through a bus, a cable, or an interface.

Embodiments of this application provide a sensing communication method and apparatus, so that monostatic sensing (monostatic sensing) indication information can be introduced in a sensing procedure or an SBP procedure. Monostatic sensing has an advantage over bistatic sensing. For example, for monostatic sensing, the sensing apparatus sends a sensing PPDU, and receives a reflected signal of the sensing PPDU. Sending and receiving may be considered synchronous, and therefore, are not affected by an error such as a carrier frequency offset (carrier frequency offset) or a sampling frequency offset (sampling frequency offset). Therefore, sensing performance is better.

For example, the reflected signal may be a signal after the sensing PPDU is reflected by an environment, or the like. For ease of description, the following describes monostatic by using sending the sensing PPDU and receiving the sensing PPDU as an example. For example, monostatic sensing may be that an apparatus that sends the sensing PPDU and an apparatus that receives the sensing PPDU are a same apparatus. Bistatic sensing may be that an apparatus that sends the sensing PPDU and an apparatus that receives the sensing PPDU are not a same apparatus.

The following describes a communication system in embodiments of this application.

The technical solutions provided in embodiments of this application may be applied to a wireless local area network (wireless local area network, WLAN) system, for example, Wi-Fi or ambient power (ambient power, AMP). For example, the method provided in embodiments of this application is applicable to the IEEE 802.11 series protocols, for example, the 802.11a/b/g protocol, the 802.11bf protocol, the 802.11n protocol, the 802.11ac protocol, the 802.11ax protocol, the 802.11be protocol, the 802.11bn protocol, or a next-generation protocol. Examples are not enumerated. The technical solutions provided in embodiments of this application may be further applied to a wireless personal area network (wireless personal area network, WPAN) based on an ultra-wideband (ultra-wideband, UWB) technology. The technical solutions provided in embodiments of this application may be further applied to a millimeter wave (millimeter wave, MMW) technology, including an IMMW. For example, the method provided in embodiments of this application may be applied to the IEEE 802.15 series protocols such as the 802.15.4a protocol, the 802.15.4z protocol, the 802.15.4ab protocol, or a future-generation UWB WPAN protocol. Examples are not enumerated. The technical solutions provided in embodiments of this application may be further applied to the following communication systems, for example, an internet of things (internet of things, IoT) system, a vehicle to X (vehicle to X, V2X) system, a narrowband internet of things (narrowband internet of things, NB-IoT) system, a long term evolution (long term evolution, LTE) system, a 5th generation (5th generation, 5G) communication system, and a new communication system emerging in future communication development.

The WLAN system may provide high-rate and low-latency transmission. With continuous evolution of WLAN application scenarios, the WLAN system is to be applied to more scenarios or industries, for example, an internet of things industry, an internet of vehicles industry, a banking industry, enterprise offices, stadiums and exhibition halls, concert halls, hotel rooms, dormitories, wards, classrooms, supermarkets, squares, streets, production workshops, and warehousing. Certainly, a device (for example, an access point or a station) that supports WLAN communication or sensing may be a sensor node (for example, a smart water meter, a smart electricity meter, or a smart air detection node) in smart city, a smart device (for example, a smart camera, a projector, a display, a television, a speaker, a refrigerator, and a washing machine) in smart home, a node in an internet of things, an entertainment terminal (for example, a wearable device like an augmented reality (augmented reality, AR) device or a virtual reality (virtual reality, VR) device), a smart device (for example, a printer, a projector, a loudspeaker, or a speaker) in smart office, an internet of vehicles device in the internet of vehicles, an infrastructure in a daily life scenario (for example, a vending machine, a self-service navigation console of a supermarket, a self-service cashier device, and a self-service ordering machine), a device in a large sports and music venue, and the like.

Although embodiments of this application mainly use a WLAN as an example, especially a network applied to IEEE 802.11 series standards, various aspects in embodiments of this application may be extended to other networks that use various standards or protocols, for example, Bluetooth (Bluetooth), a high performance radio LAN (high performance radio LAN, HIPERLAN) (a wireless standard similar to the IEEE 802.11 standard, and mainly used in Europe), a wide area network (wide area network, WAN), or another network currently known or developed in the future.

In a possible implementation, the method provided in embodiments of this application may be implemented by a communication apparatus in a communication system. For example, the communication apparatus may be an access point (access point, AP) or a station (station, STA).

The access point is an apparatus having a wireless communication function, supports communication or sensing based on a WLAN protocol, has a function of communicating with or sensing another device (for example, a non-AP STA or another access point) in a WLAN network, and certainly may further have a function of communicating with or sensing another device. Alternatively, the access point is equivalent to a bridge that connects a wired network and a wireless network. A main function of the access point is to connect various wireless network clients together and then connect the wireless network to the Ethernet. In a WLAN system, the access point may be referred to as an access point station (AP STA). The apparatus having the wireless communication function may be an entire device, or may be a chip, a processing system, a functional module, or the like mounted in an entire device. The device in which the chip, the processing system, or the functional module is mounted may implement a method, a function, and the like in embodiments of this application under control of the chip, the processing system, or the functional module. The AP in embodiments of this application is an apparatus that provides a service for the non-AP STA, and may support the 802.11 series protocols, subsequent protocols, or the like. For example, the access point may be an access point for a terminal (for example, a mobile phone) to access a wired (or wireless) network, and is mainly deployed in a home, a building, and a park. A typical coverage radius is tens to hundreds of meters. Certainly, the access point may alternatively be deployed outdoors. For another example, the AP may be a communication entity, for example, a communication server, a router, a switch, or a bridge, or the AP may include various forms of macro base stations, micro base stations, relay stations, and the like. Certainly, the AP may alternatively be a chip, a processing system, or a module in the foregoing devices in various forms, to implement a method and a function in embodiments of this application. Certainly, the AP may also include an AP affiliated to a multi-link device (multi-link device, MLD).

The STA is an apparatus having a wireless communication function, supports communication or sensing based on a WLAN protocol, and has a capability of communicating with or sensing another non-AP STA or access point in a WLAN network. In a WLAN system, the station may be referred to as a non-access point station (non-access point station, non-AP STA). For example, the STA is any user communication device that allows a user to communicate with or sense an AP and further communicate with a WLAN. The apparatus having a wireless communication function may be an entire device, or may be a chip, a processing system, or a functional module mounted in an entire device. The device in which the chip, the processing system, or the functional module is mounted may implement a method and a function in embodiments of this application under control of the chip, the processing system, or the functional module. For example, the STA may be a wireless communication chip, a wireless sensor, or a wireless communication terminal, and may also be referred to as a user. For another example, the STA may be a mobile phone that supports a Wi-Fi communication function, a tablet computer that supports a Wi-Fi communication function, a set-top box that supports a Wi-Fi communication function, a smart television that supports a Wi-Fi communication function, a smart wearable device that supports a Wi-Fi communication function, a vehicle-mounted communication device that supports a Wi-Fi communication function, or a computer that supports a Wi-Fi communication function. Certainly, the STA may alternatively be a chip, a processing system, or a module in the foregoing devices in various forms, to implement a method and a function in embodiments of this application. Certainly, the STA may also include a non-AP STA affiliated to a multi-link device (multi-link device, MLD).

For example, a communication system to which the method provided in embodiments of this application may be applied may include an access point and a station. For example, embodiments of this application may be applied to a scenario of communication or sensing between an AP and a STA, between APs, or between STAs in a WLAN. This is not limited in embodiments of this application. Optionally, the AP may communicate with or sense a single STA, or the AP may simultaneously communicate with or sense a plurality of STAs. Specifically, communication or sensing between the AP and the plurality of STAs may be classified into downlink transmission in which the AP simultaneously sends signals to the plurality of STAs and uplink transmission in which the plurality of STAs send signals to the AP. A WLAN communication protocol may be supported between an AP and a STA, between APs, or between STAs. The communication protocol may include the IEEE 802.11 series protocols, for example, the 802.11n/802.11ac/802.11ax/802.11be/802.11bn protocol. Certainly, protocols subsequent to 802.11bn may also be supported.

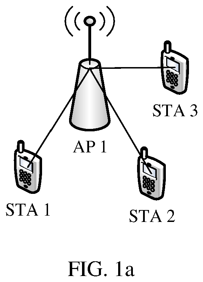

FIG. 1a is a diagram of an architecture of a communication system according to an embodiment of this application. The communication system may include one or more APs and one or more STAs. FIG. 1a shows one access point AP 1 and three stations STA 1, STA 2, and STA 3. For example, the method provided in embodiments of this application may be applied to data communication between one AP and one or more STAs (for example, communication between the AP 1 and the STA 1 or communication of the AP 1 with the STA 1 and the STA 2 shown in FIG. 1a), communication between APs (for example, communication between the AP 1 and an AP 2 shown in FIG. 1a), or communication between STAs (for example, communication between the STA 2 and the STA 3 shown in FIG. 1a). The method provided in embodiments of this application may be applied to but not limited to single-user uplink/downlink transmission, multi-user uplink/downlink transmission, vehicle-to-everything (vehicle-to-everything, V2X, where X may represent everything), and device-to-device (device-to-device, D2D). For example, the V2X may include vehicle-to-vehicle (vehicle-to-vehicle, V2V), vehicle-to-infrastructure (vehicle-to-infrastructure, V2I), vehicle-to-pedestrian (vehicle-to-pedestrian, V2P) communication, or vehicle-to-network (vehicle-to-network, V2N) communication.

It may be understood that, in FIG. 1a, an example in which a STA is a mobile phone and an AP is a router is used. This does not mean that types of the AP and the STA in this embodiment of this application are limited. In addition, FIG. 1a shows only one AP and three STAs as an example. There may be more or fewer APs or STAs. This is not limited in this embodiment of this application.

The following describes a sensing communication method according to an embodiment of this application.

A sensing initiator (sensing initiator) is an apparatus that initiates a sensing behavior, or an apparatus that initiates a sensing measurement session, or an apparatus that sends a sensing measurement request (sensing measurement request) frame. For example, the sensing initiator may send the sensing measurement request frame on sub-7 GHz, or send the sensing measurement request frame at a high frequency.

A sensing responder (sensing responder) is an apparatus that responds to the sensing behavior initiated by the sensing initiator and participates in sensing. For example, the sensing responder may receive the sensing measurement request frame, and reply with a sensing measurement response frame. In an example, the sensing initiator may be an AP, and the sensing responder may be a STA. In another example, the sensing initiator may be a STA, and the sensing responder may be an AP.

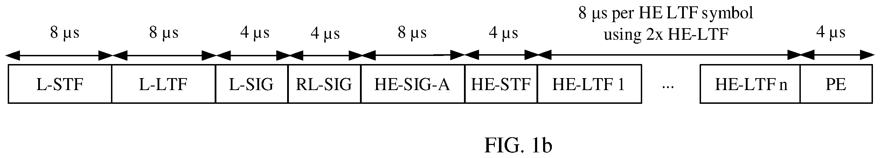

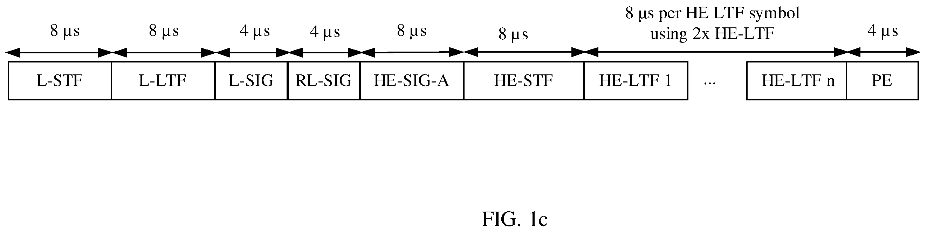

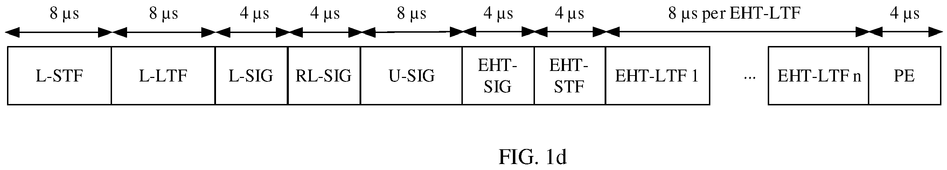

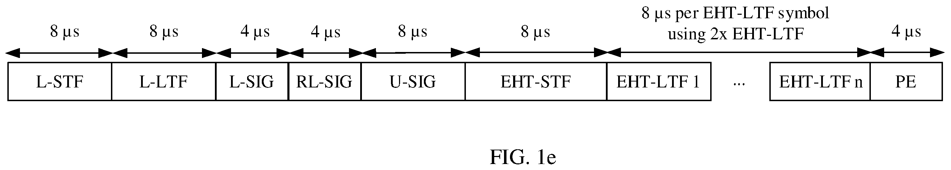

A sensing transmitter (sensing transmitter) is an apparatus that sends a sensing PPDU. For example, the sensing PPDU may include but is not limited to an SI2SR NDP, an SR2SI NDP, or an SR2SR NDP. FIG. 1b to FIG. 1e are diagrams of examples of formats of sensing PPDUs. A sensing PPDU shown in FIG. 1b is shown by using a high efficiency (high efficiency, HE) ranging (HE ranging) NDP as an example, a sensing PPDU shown in FIG. 1c is shown by using an HETB ranging NDP as an example, a sensing PPDU shown in FIG. 1d is shown by using an extremely high throughput (extremely high throughput, EHT) ranging NDP as an example, and a sensing PPDU shown in FIG. 1e is shown by using an EHT TB ranging NDP as an example. For descriptions of the following fields shown in FIG. 1b to FIG. 1e, refer to a related standard or protocol. Details are not described herein again: a legacy short training field (legacy short training field, L-STF), a legacy long training field (legacy long training field, L-LTF), a legacy signaling (legacy signaling, L-SIG) field, a repeated legacy signaling (repeated L-SIG, RL-SIG) field, a high efficiency signaling field A (high efficiency signaling field A, HE-SIG-A), a high efficiency short training field (high efficiency short training field, HE-LTF), a universal signaling (universal SIG, U-SIG) field, an extremely high throughput short training field (extremely high throughput short training field, EHT-STF), an extremely high throughput signaling (EHT-SIG) field, or packet extension (packet extension, PE). Certainly, the sensing PPDUs shown in FIG. 1b to FIG. 1e are merely examples. With progress of standards, a sensing PPDU in another format further appears subsequently. This is not limited in this embodiment of this application. 8 µs per EHT-LTF shown in FIG. 1d may include 8 µs per EHT LTF symbol using 2x EHT-LTF (8 µs per EHT LTF symbol using 2x EHT-LTF). Lengths of all fields in the NDPs shown in FIG. 1b to FIG. 1e are merely examples, and should not be construed as a limitation on this embodiment of this application.

A sensing receiver (sensing receiver) is an apparatus that receives the sensing PPDU.

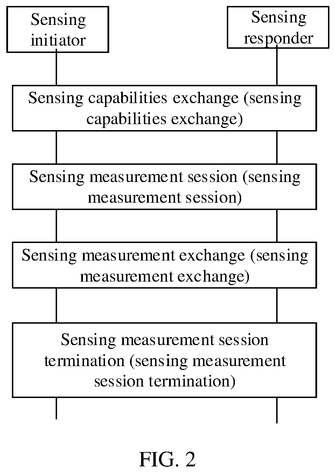

FIG. 2 is a diagram of phases of a sensing procedure according to an embodiment of this application. In the 802.11bf standard, sensing apparatuses first perform a capabilities exchange (capabilities exchange) between devices, as shown in a sensing capabilities exchange (sensing capabilities exchange) phase in FIG. 2. The sensing apparatuses may learn of sensing capabilities of each other by exchanging basic capabilities. For example, a sensing initiator may send a sensing capabilities element to a sensing responder, and the sensing capabilities element may carry a sensing capability of the sensing initiator. The sensing responder may send a sensing capabilities element to the sensing initiator, and the sensing capabilities element may carry a sensing capability of the sensing responder.

After the sensing apparatuses complete capabilities exchanges, when a sensing measurement session (sensing measurement session) needs to be initiated, the sensing initiator may initiate setup of the sensing measurement session by sending a sensing measurement request (sensing measurement request) frame, and the sensing responder receives the sensing measurement request frame and replies with a sensing measurement response (sensing measurement response) frame. The sensing initiator may assign different roles and parameters to different sensing responders for different sensing tasks in a sensing measurement session phase, to complete setup of the sensing measurement session. In the sensing measurement session phase, related parameters in sensing are mainly negotiated, for example, a receiving/transmitting role of a device, a sensing bandwidth, whether a channel state information (channel state information, CSI) matrix needs to be fed back, and whether a sensing measurement report frame needs to be fed back.

After the sensing measurement session is set up, the sensing initiator may initiate one or more sensing measurement exchanges (sensing measurement exchanges). The sensing measurement exchanges may include a trigger based (trigger based, TB) sensing measurement exchange (TB sensing measurement exchange) and a non-trigger based (non-trigger based, Non-TB) sensing measurement exchange (Non-TB sensing measurement exchange). The TB sensing measurement exchange is usually initiated by an AP (for example, the AP serves as the sensing initiator), and a non-TB sensing measurement exchange is usually initiated by a STA (for example, the STA serves as the sensing initiator).

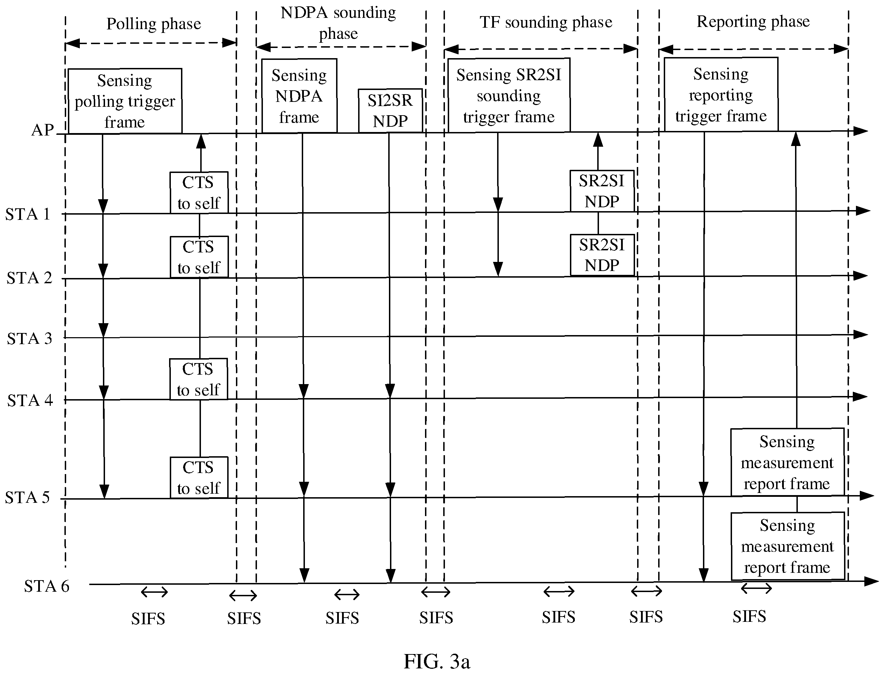

FIG. 3a is a schematic flowchart of a TB sensing measurement exchange according to an embodiment of this application. As shown in FIG. 3a, the TB sensing measurement exchange may include at least one of the following phases: a polling (polling) phase, an NDPA sounding (sounding) phase, a trigger frame (trigger frame, TF) sounding (TF sounding) phase, and a reporting (reporting) phase.

In a TB sensing measurement exchange scenario, an AP serves as a sensing initiator, and may send, in the polling phase, a sensing polling trigger frame to a STA that is intended to be invited to participate in current exchange measurement, to invite each STA to participate. The STA that participates in the exchange may reply with a clear to send (clear to send, CTS)-to-self (CTS-to-self) frame for an acknowledgement. As shown in FIG. 3a, the AP may invite a STA 1 to a STA 6 to participate in a current sensing measurement exchange process. The STA 1, a STA 2, a STA 4, and a STA 5 confirm to participate in the current sensing measurement exchange. In the NDPA sounding phase, the AP sends a sensing NDPA frame to a plurality of responders that confirm to participate in NDPA sounding, and sends an SI2SR NDP after a short interframe space (short interframe space, SIFS). The responders receive the SI2SR NDP based on information in the sensing NDPA frame, to implement sensing measurement. In the TF sounding phase, the AP sends a sensing SR2SI sounding trigger frame to a plurality of responders that confirm to participate in TF sounding, and the responders send SR2SI NDPs based on information allocated by the SR2SI sounding trigger frame, to implement sensing measurement. In the reporting phase, the AP may send a sensing reporting trigger frame to a plurality of responders that confirm to participate in the reporting phase, and the responders send sensing measurement report frames based on the sensing reporting trigger frame.

In FIG. 3a, roles of the STA 1 and the STA 2 may be sensing transmitters, and roles of the STA 4 to the STA 6 may be sensing receivers. When the AP sends the sensing polling trigger frame to the STA 1 to the STA 5, a STA 3 does not reply with a CTS-to-self frame. Therefore, the STA 3 does not participate in a sensing procedure. The sensing polling trigger frame is optional, and therefore, the STA 6 may skip the polling phase. The AP and the STA 4 may not feed back a sensing measurement result through negotiation. Therefore, although the STA 4 in FIG. 3a completes sensing measurement based on the SI2SR NDP received by the STA 4, in the reporting phase, the STA 4 may not report the sensing measurement result by using the sensing measurement report frame, for example, report the sensing measurement result by using an upper layer. For example, the sensing measurement result may include CSI, or a channel impulse response (channel impulse response, CIR). For ease of description, the CSI is used as an example for description in some examples in the following, but should not be construed as a limitation on this embodiment of this application.

With progress of standards, a specific procedure of the TB sensing measurement exchange may change. Therefore, the procedure of the TB sensing measurement exchange shown in FIG. 3a is merely an example, and should not be construed as a limitation on this embodiment of this application.

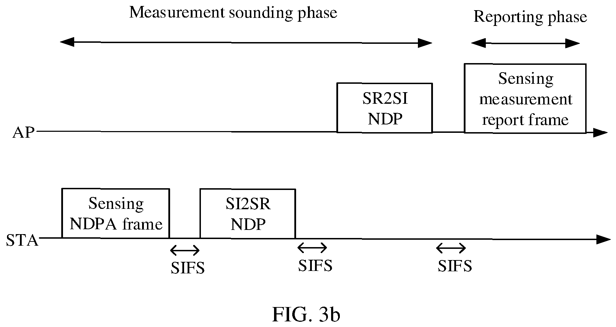

FIG. 3b is a schematic flowchart of a non-TB sensing measurement exchange according to an embodiment of this application. In a non-TB sensing measurement exchange scenario, a STA serves as a sensing initiator, and may send a sensing NDPA frame, and send an SI2SR NDP after an SIFS. An AP serves as a sensing responder, and sends an SR2SI NDP after an SIFS. In addition, a reporting phase is performed after an SIFS, and the AP includes a measurement result in a sensing measurement report frame and feeds back the sensing measurement report frame to the sensing initiator. For example, the result reported by the AP may be a sensing measurement result (for example, including STA-to-AP CSI) obtained based on the SI2SR NDP. The AP sends the SR2SI NDP. After receiving the SR2SI NDP, the STA may obtain a sensing measurement result (for example, including AP-to-STA CSI) based on the SR2SI NDP.

In the non-TB sensing measurement exchange, the STA may flexibly configure STA-to-AP channel measurement and/or AP-to-STA channel measurement by using the sensing NDPA frame. For example, when a STA-to-AP configuration is no measurement, the SI2SR NDP may be a third NDP. In this case, the AP may not send the sensing measurement report frame. For example, when an AP-to-STA configuration is no measurement, the SR2SI NDP may be a third NDP. It may be considered that an air interface time of the third NDP is less than or equal to a threshold. A specific value of the threshold is not limited in this embodiment of this application. Alternatively, an SR2SI number of space-time streams (number of space-time streams, NSTS) (or SR2SI number of spatial streams (number of spatial streams, NSS)) field in the third NDP may be set to 0, and/or an SR2SI repetition (SR2SI rep) field in the third NDP is set to 0. Alternatively, an SI2SR NSTS (or SI2SR NSS) field in the third NDP may be set to 0, and/or an SI2SR repetition (SI2SR rep) field in the third NDP is set to 0.

A sensing measurement exchange shown below in embodiments of this application may include a trigger based sensing measurement exchange, or may include a non-trigger based sensing measurement exchange. The TB sensing measurement exchange and the non-TB sensing measurement exchange shown above are merely examples, and FIG. 3a and FIG. 3b show the basic procedures thereof. One TB sensing measurement exchange may include one or more of the following phases: a polling phase, a TF sounding phase, an NDPA sounding phase, or a reporting phase. There are a plurality of potential variants. Examples are not enumerated herein. For example, one sensing measurement exchange may include a TF sounding phase (without a polling phase, an NDPA sounding phase, and a reporting phase); or include a polling phase and an NDPA sounding phase (without a TF sounding phase and a reporting phase); or include a polling phase and a TF sounding phase (without an NDPA sounding phase and a reporting phase). Examples are not enumerated herein.

After a period of time, if the sensing initiator or the sensing responder does not need the sensing measurement session, the sensing initiator or the sensing responder may terminate the sensing session by sending a sensing measurement session termination frame, as shown in a sensing measurement session termination phase in FIG. 2.

The sensing procedure shown in FIG. 2 may correspond to different sensing tasks. For example, the sensing initiator may initiate a sensing procedure for a fall detection task. In a sensing measurement exchange phase, the sensing initiator may detect information about a target by sending several sensing PPDUs. For another example, the sensing initiator may initiate a sensing procedure for a breathing detection task. In a sensing measurement exchange phase, the sensing initiator may also detect information about a target by sending several sensing PPDUs. The information about the target herein may include motion of the target, and the like. The target detected through the sensing procedure may be in a moving state or a static state. This is not limited in embodiments of this application.

The procedures shown in FIG. 2, FIG. 3a, and FIG. 3b are merely examples. With progress of standards, the sensing procedure or the sensing measurement exchange procedure may change. Therefore, the procedures shown in FIG. 2, FIG. 3a, and FIG. 3b should not be construed as a limitation on embodiments of this application.

The following describes another sensing communication method according to an embodiment of this application.

A sensing by proxy (sensing by proxy, SBP) initiator is an apparatus that initiates an SBP procedure or an apparatus that initiates an SBP request (SBP request) frame. Usually, the SBP initiator may be a STA.

An SBP responder is an apparatus that responds to the SBP procedure or an apparatus that receives the SBP request frame and replies with an SBP response frame. Usually, the SBP responder may be an AP.

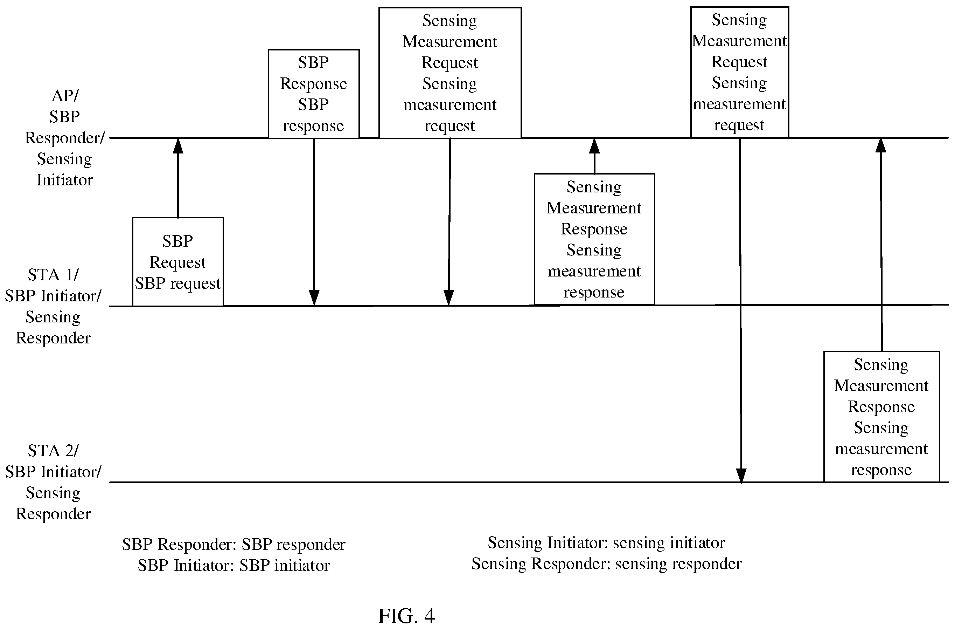

FIG. 4 is a diagram of an SBP procedure according to an embodiment of this application. As shown in FIG. 4, a STA 1 serves as an SBP initiator and sends an SBP request frame to an AP. As an SBP responder, after receiving the SBP request frame (briefly referred to as an SBP request in FIG. 4), the AP performs sensing establishment with a corresponding sensing responder based on a parameter carried in the SBP request frame, completes measurement, and performs feedback. For example, after receiving the SBP request frame, the AP replies with an SBP response frame (briefly referred to as an SBP response in FIG. 4), and the AP may serve as a sensing initiator to initiate a sensing measurement session. For example, the AP may separately send a sensing measurement request frame to the STA 1 and a STA 2. FIG. 4 shows an example in which the STA 1 serves as both the SBP initiator and the sensing responder. In a specific implementation, the STA 1 may alternatively not participate in the sensing measurement session initiated by the SBP responder (that is, the STA 1 may not be the sensing responder).

For example, the SBP procedure may further include a feedback phase (not shown in FIG. 4) and a termination phase (not shown in FIG. 4). For example, in the feedback phase (not shown in FIG. 4) of SBP, as the SBP responder, the AP may collect a sensing result, and then feed back the sensing result to the SBP initiator (for example, the STA 1). In the termination phase (not shown in FIG. 4) of SBP, the SBP initiator may terminate the established SBP procedure.

A sensing measurement request sent by the AP to the STA 1 or the STA 2 shown in FIG. 4 is merely an example, and should not be construed as a limitation on this embodiment of this application. A sequence between the SBP response and the sensing measurement request in FIG. 4 is not limited in this embodiment of this application. For descriptions of the sensing measurement request and a sensing measurement response in FIG. 4, refer to FIG. 3a or the following. Details are not described herein again.

The procedures shown in FIG. 2 to FIG. 4 are shown by using a bistatic sensing procedure as an example. For a procedure after monostatic sensing is introduced, refer to the following. Certainly, a sensing procedure after monostatic sensing is introduced may also have the four phases shown in FIG. 2. For the procedure after monostatic sensing is introduced in the following, refer to FIG. 2 to FIG. 4. A repeated part between each procedure shown in the following and the foregoing procedure is not described in the following again.

The following describes still another sensing communication method in an embodiment of this application based on the four phases shown in FIG. 2.

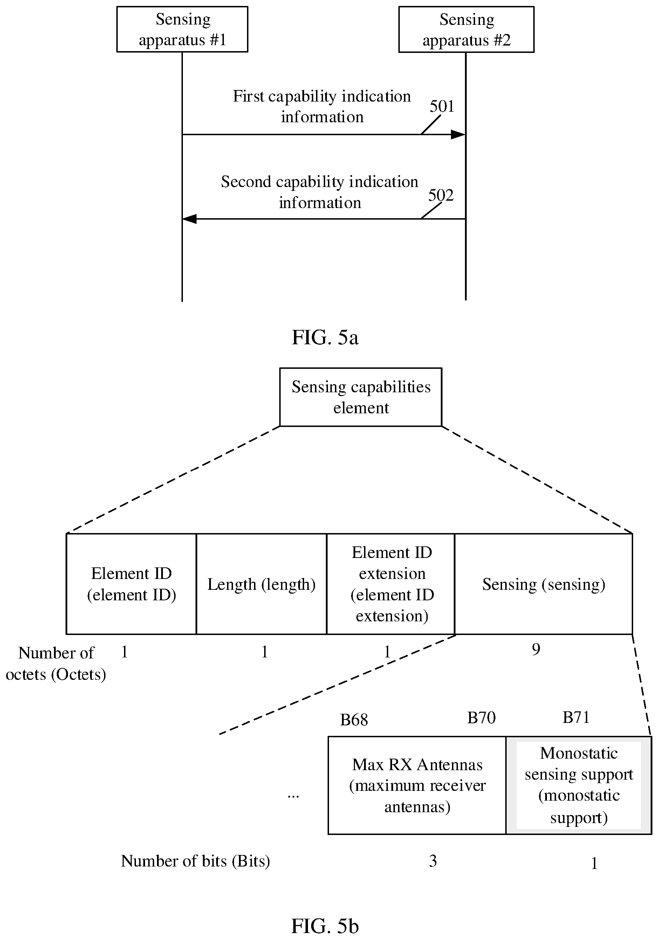

FIG. 5a is a schematic flowchart of a sensing communication method according to an embodiment of this application. As shown in FIG. 5a, the method includes the following steps.

501: A sensing apparatus #1 sends first capability indication information to a sensing apparatus #2, and the sensing apparatus #2 receives the first capability indication information.

502: The sensing apparatus #2 sends second capability indication information to the sensing apparatus #1, and the sensing apparatus #1 receives the second capability indication information.

In a sensing capabilities exchange phase, an apparatus that is a sensing initiator and an apparatus that is a sensing responder cannot be distinguished. Therefore, FIG. 5a shows the sensing apparatus #1 and the sensing apparatus #2 as examples. In an example, the sensing apparatus #1 may be an AP, and the sensing apparatus #2 may be a STA. In another example, the sensing apparatus #1 may be a STA, and the sensing apparatus #2 may be an AP. For example, the AP may separately perform a capabilities exchange with one or more STAs, and specific types of sensing apparatuses are not enumerated herein. Usually, after a capabilities exchange is completed, a sensing apparatus that sends a sensing measurement request frame may be a sensing initiator.

The first capability indication information may indicate a capability of the sensing apparatus #1, and the second capability indication information may indicate a capability of the sensing apparatus #2. For example, the first capability indication information may be carried in a first sensing capabilities element. The second capability indication information may be carried in a second sensing capabilities element. Although objects that indicate capabilities are different, formats of the two sensing capabilities elements are similar.

For ease of brevity, the first sensing capabilities element and the second sensing capabilities element are not distinguished in the following, and a sensing capabilities element is used as an example for description. For example, the sensing capabilities element may be carried in any one of the following frames: an association request (association request) frame, an association response (associate response) frame, a reassociation request (reassociation request) frame, a reassociation response (reassociation response) frame, a probe request (probe request) frame, and a probe response (probe response) frame. The sensing apparatus may send a corresponding frame based on the specific type of the sensing apparatus. Details are not described herein again. A format of the sensing capabilities element is described in detail below.

The sensing capabilities element may include a monostatic support (monostatic support) field, and the monostatic support field may indicate whether a transmitter of the sensing capabilities element supports monostatic sensing. The monostatic support field may also be referred to as a monostatic sensing support (monostatic sensing support) field, or the like. The name is not limited in this embodiment of this application.

Quantities of bits (or quantities of bytes) that are occupied by fields in frames, a sequence, or the like provided in the accompanying drawings in embodiments of this application are merely examples, and should not constitute a limitation on a frame format, a frame length, or a sequence of fields provided in embodiments of this application. Names of the frames and included fields in the accompanying drawings in embodiments of this application are merely examples, and should not constitute a limitation on frames provided in embodiments of this application. For ease of description, embodiments of this application are shown by using a "field" as an example, and a "field", a "subfield", an "element", a "subelement", and the like are not specifically distinguished. Although the "field", the "subfield", the "element", and the "subelement" are not specifically distinguished in embodiments shown in this application, a person skilled in the art may adaptively distinguish between relationships between the fields shown in embodiments of this application.

FIG. 5b is a diagram of a format of a sensing capabilities element according to an embodiment of this application. As shown in FIG. 5b, the sensing capabilities element may include the following fields: element ID (element ID), length (length), element ID extension (element ID extension), and sensing (sensing). The sensing field may include a monostatic support field. For example, as shown in FIG. 5b, the monostatic support field may occupy 1 bit. For example, a relationship between a value and a meaning of the field may be as follows: 1 indicates that a transmitter of the sensing capabilities element supports monostatic sensing, and 0 indicates that the transmitter of the sensing capabilities element does not support monostatic sensing. Certainly, the relationship between the value and the meaning shown herein is merely an example. This is not limited in this embodiment of this application.

A location and a length of the monostatic support field shown in FIG. 5b are merely examples. In a specific implementation, the monostatic support field may be further located at another location in the sensing field, or the monostatic support field may further occupy more bits. This is not limited in this embodiment of this application. A name of the monostatic support field is merely an example. For example, the monostatic support field may also be referred to as a monostatic supported field, a monostatic field, a monostatic capability field, or the like. Names are not enumerated herein. Descriptions of the location, the length, and the name of the monostatic support field herein is also applicable to other fields shown below. Details are not described below again.

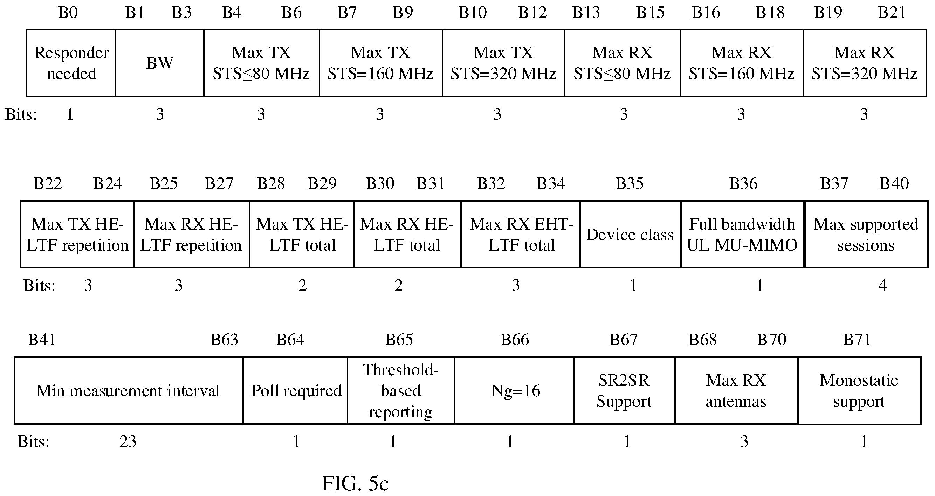

For example, the sensing field may further include at least one of the following: maximum supported bandwidth (bandwidth, BW), maximum transmitter (transmitter, TX) streams when a bandwidth is less than or equal to 80 MHz (Max TX STS≤80 MHz), maximum supported sessions (Max Supported Sessions), sensing responder to sensing responder supported (SR2SR Supported), and maximum receiver (receiver, RX) antennas (Max RX Antennas). For example, FIG. 5c is a diagram of a format of a sensing field according to an embodiment of this application. As shown in FIG. 5c, the sensing capabilities element may include a monostatic support field, and the sensing capabilities element may further include at least one of the following: responder needed (responder needed), bandwidth (bandwidth, BW), maximum transmitter streams (Max) when a bandwidth is less than or equal to 80 MHz (Max TX STS≤80 MHz), maximum transmitter streams when a bandwidth is equal to 160 MHz (Max TX STS=160 MHz), maximum transmitter streams when a bandwidth is equal to 320 MHz (Max TX STS=320 MHz), maximum receiver streams when a bandwidth is less than or equal to 80 MHz (Max RX STS≤80 MHz), maximum receiver streams when a bandwidth is equal to 160 MHz (Max RX STS=160 MHz), maximum receiver streams when a bandwidth is equal to 320 MHz (Max RX STS=320 MHz), maximum transmitter HE-LTF repetition (Max TX HE-LTF repetition), maximum receiver HE-LTF repetition (Max RX HE-LTF repetition), maximum transmitter HE-LTF total (Max TX HE-LTF total), maximum receiver HE-LTF total (Max RX HE-LTF total), maximum receiver EHT-LTFs total (Max TX EHT-LTF total), device class (device class), full bandwidth uplink multi-user multiple-input multiple-output (multi-user multiple-input multiple-output, MU-MIMO) (full bandwidth UL MU-MIMO), maximum supported sessions (max supported sessions), minimum measurement interval (min measurement interval), poll required (poll required), threshold-based reporting (threshold-based reporting), subcarrier smoothing Ng=16, sensing responder to sensing responder supported (SR2SR supported), and maximum receiver antennas (max RX antennas). A sequence and lengths of the fields in FIG. 5c are not limited in this embodiment of this application. For descriptions of B0 to B70 in the sensing capabilities element shown in FIG. 5c, refer to a related standard or protocol. Details are not described herein again. The sensing capabilities element shown in FIG. 5c is merely an example. As progress of standards, a capability indicated in the sensing capabilities element may further change. This is not limited in this embodiment of this application. A length or a sequence of the monostatic support field shown in FIG. 5c is not limited in this embodiment of this application.

Whether a sensing apparatus supports monostatic sensing may be related to a hardware capability of the sensing apparatus. For example, when the sensing apparatus supports monostatic sensing, because the sensing apparatus both needs to send the sensing PPDU and needs to receive the sensing PPDU, energy leakage may exist between a transmitter antenna and a receiver antenna. For example, interference caused by leakage from the transmitter antenna may cause ADC saturation of a receive chain. Therefore, whether the sensing apparatus supports monostatic sensing may be related to at least one of the following hardware capabilities of the sensing apparatus: an antenna, a radio frequency, or a baseband chip.

For example, the method shown in FIG. 5a or the sensing capabilities elements shown in FIG. 5b and FIG. 5c may be applied to the sensing capabilities exchange phase (as shown in FIG. 2), or may be applied to another similar monostatic sensing scenario. This is not limited in this embodiment of this application.

In this embodiment of this application, the monostatic support field is added in the sensing capabilities element to indicate whether the sensing apparatus supports monostatic sensing, so that a peer side can learn of more capabilities of the sensing apparatus, thereby improving communication efficiency.

After a capabilities exchange is completed, the sensing apparatus may select a sensing responder and a corresponding sensing parameter based on a requirement of a sensing task, and establish a sensing session. For descriptions of the sensing parameter, refer to the descriptions of FIG. 2, for example, an assigned role and a sensing bandwidth.

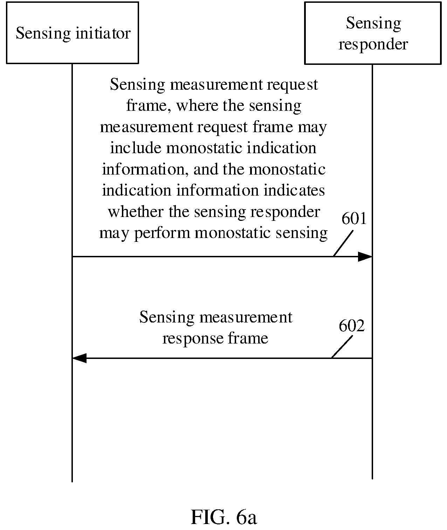

FIG. 6a is a schematic flowchart of a sensing communication method according to an embodiment of this application. FIG. 6a shows an example of one sensing responder. In a specific implementation, a sensing initiator may assign a role of one or more sensing responders by using a sensing measurement request frame, which is not shown one by one herein. For example, the sensing initiator may assign a role of one sensing responder by using one sensing measurement request frame.

As shown in FIG. 6a, the method includes the following steps.

601: The sensing initiator sends the sensing measurement request (sensing measurement request) frame, and the sensing responder receives the sensing measurement request frame. The sensing measurement request frame may include monostatic indication information, and the monostatic indication information indicates whether the sensing responder may perform monostatic sensing.

For example, the monostatic indication information may indicate whether the sensing responder is in a monostatic sensing role. The sensing initiator may assign the monostatic sensing role to the sensing responder based on the monostatic indication information.

For example, the sensing measurement request frame may further include sensing transmitter indication information and sensing responder indication information. The sensing transmitter indication information may indicate whether the sensing responder is a sensing transmitter, or whether a role of the sensing transmitter is assigned to the sensing responder. The sensing receiver indication information indicates whether the sensing responder is a sensing receiver, or whether a role of the sensing receiver is assigned to the sensing responder. When the sensing transmitter indication information indicates that the sensing responder is a sensing transmitter, and the sensing receiver indication information indicates that the sensing responder is a sensing receiver, it indicates that the sensing responder is separately a sensing transmitter or a sensing receiver in different measurement exchanges, or is separately a sensing transmitter or a sensing receiver in different phases of a same measurement exchange. For example, in a procedure of a TB sensing measurement exchange, the sensing responder not only may participate in a TF sounding phase as a sensing transmitter, but also may participate in an NDPA sounding phase as a sensing receiver.

However, when the monostatic indication information shown in this embodiment of this application indicates that the sensing responder performs monostatic sensing, it indicates that the sensing responder may be simultaneously a sensing transmitter and a sensing receiver. "Simultaneously" shown herein may include a same moment, a same phase, or the like. For example, when the role of the sensing responder is a sensing transmitter and a sensing receiver, and performs monostatic sensing, it indicates that the sensing responder may separately be a sensing transmitter or a sensing receiver, or perform monostatic sensing in different phases of a measurement exchange; or the sensing responder may separately be a sensing transmitter and perform monostatic sensing in a same phase of a measurement exchange; or the sensing responder may separately be a sensing receiver and perform monostatic sensing in a same phase of a measurement exchange; or the sensing responder may separately be a sensing transmitter or a sensing receiver, or perform monostatic sensing in different measurement exchanges of a sensing measurement session; or the sensing responder may be separately a sensing transmitter or a sensing receiver in different phases of a measurement exchange, and perform monostatic sensing in another measurement exchange; and the like. Examples are not enumerated herein.

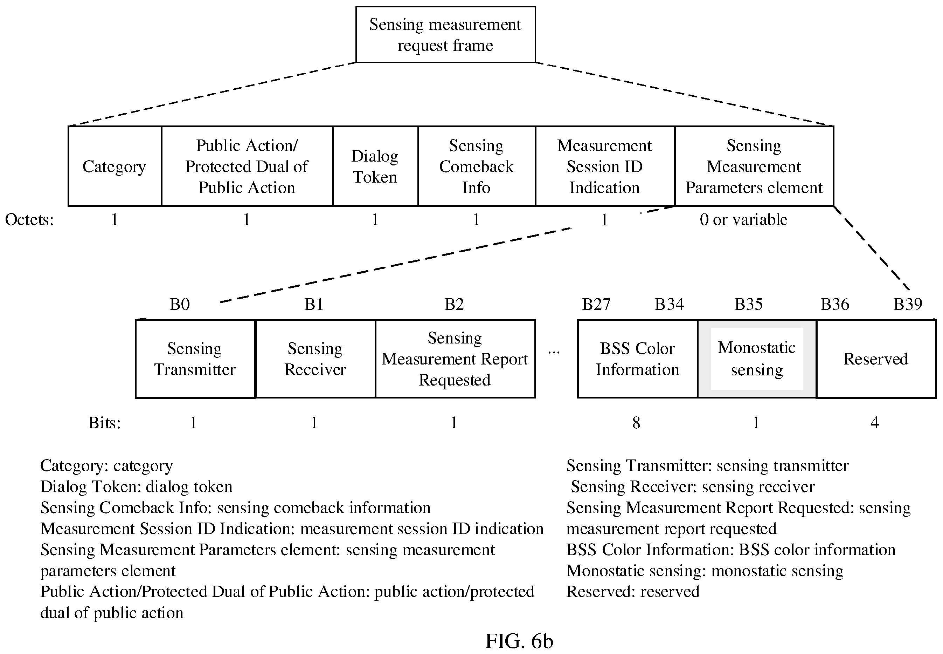

FIG. 6b is a diagram of a format of a sensing measurement request frame according to an embodiment of this application. As shown in FIG. 6b, the sensing measurement request frame may include category (category), public action/protected dual of public action (public action/protected dual of public action), dialog token (dialog token), sensing comeback information (sensing comeback info), measurement session ID indication (measurement session ID indication), and sensing measurement parameters element (sensing measurement parameters element). The sensing comeback information field may indicate an unassociated STA to resend a sensing measurement query (sensing measurement query) frame within a specified time. For example, the specified time may be after a time indicated by an unassociated STA comeback after exponent (unassociated STA comeback after exponent) field in the sensing comeback information field and before a time indicated by an unassociated STA comeback before exponent (unassociated STA comeback before exponent) field in the sensing comeback information field. The measurement session ID indication field may be used to identify a sensing measurement session initiated by the sensing initiator. The sensing measurement parameters element may include a sensing transmitter (sensing transmitter), a sensing receiver (sensing receiver), and a monostatic sensing (monostatic sensing). For example, the sensing measurement parameters element may further include sensing measurement report requested (sensing measurement report requested), basic service set (basic service set, BSS) color information (BSS color information), or the like. Other fields in the sensing measurement parameters element are not shown one by one herein. A sequence, lengths, or the like of fields shown in FIG. 6b are merely examples, and should not be construed as a limitation on this embodiment of this application.

The sensing transmitter field carries the sensing transmitter indication information, the sensing receiver field carries the sensing receiver indication information, and the monostatic sensing field carries the monostatic indication information. For the sensing transmitter field, the sensing receiver field, and the monostatic sensing field, there may be the following manners. The following descriptions are all for a same sensing measurement parameters element, or for a same sensing measurement request frame.

Manner 1: A value of the monostatic sensing field is unrelated to a value of the sensing transmitter field and a value of the sensing receiver field. In other words, whether the sensing responder performs monostatic sensing is unrelated to whether the sensing responder is the sensing transmitter or the sensing receiver. The sequence of fields shown in FIG. 6b is used as an example. For example, a B0 field is the sensing transmitter field, a B1 field is the sensing receiver field, and a B35 field is the monostatic sensing field. For example, when a value of the B0 field is 1, it indicates that the sensing responder is a sensing transmitter, and when a value of the B0 field is 0, it indicates that the sensing responder is not a sensing transmitter. When a value of the B1 field is 1, it indicates that the sensing responder is a sensing receiver, and when a value of the B1 field is 0, it indicates that the sensing responder is not a sensing receiver. When a value of the B35 field is 1, it indicates that the sensing responder may perform monostatic sensing, and when a value of the B35 field is 0, it indicates that the sensing responder does not perform monostatic sensing. Certainly, a relationship between a value and a meaning of a field shown herein is only an example. For example, when the value of the B0 field is 0, it indicates that the sensing responder is a sensing transmitter; and when the value of the B0 field is 1, it indicates that the sensing responder is not a sensing transmitter. Examples are not enumerated herein.

Table 1 shows an example of a relationship between values and meanings of the B0 field, the B1 field, and the B35 field. The meanings in Table 1 refers to roles assigned by the sensing transmitter to the sensing responder.

**Table 1**

| B0 | B1 | B35 | Meaning |
|---|---|---|---|
| 0 | 0 | 0 | No role is assigned to a sensing responder (or reserved) |
| 0 | 0 | 1 | The sensing responder may perform monostatic sensing |
| 1 | 0 | 1 | The sensing responder is a sensing transmitter, and may also perform monostatic sensing |
| 0 | 1 | 1 | The sensing responder is a sensing receiver, and may also perform monostatic sensing |
| 1 | 1 | 1 | The sensing responder is a sensing transmitter, and a sensing receiver, and may also perform monostatic sensing |

It can be learned from Table 1 that, when the sensing responder may perform monostatic sensing, the sensing responder may not be a sensing transmitter or a sensing receiver. In other words, it may be considered that whether the sensing responder may perform monostatic sensing is unassociated with whether the sensing responder is a sensing transmitter or a sensing receiver. Therefore, more flexible scheduling is implemented during a sensing measurement exchange.

Manner 2: A value of the monostatic sensing field is related to a value of the sensing transmitter field. For example, when the sensing transmitter field indicates that the sensing responder is a sensing transmitter, the sensing responder may perform monostatic sensing. In other words, when the sensing responder has a role of a sensing transmitter, the sensing initiator may assign a monostatic sensing role to the sensing responder; or when the sensing responder may perform monostatic sensing, the sensing responder may also be a sensing transmitter. For descriptions of the B0 field, the B1 field, and the B35 field, refer to Manner 1. Details are not described herein again.

Table 2 shows an example of a relationship between values and meanings of the B0 field, the B1 field, and the B35 field.

**Table 2**

| B0 | B1 | B35 | Meaning |
|---|---|---|---|
| 1 | 0 | 0 | A sensing responder is a sensing transmitter |
| 1 | 1 | 0 | The sensing responder is a sensing transmitter, and is also a sensing receiver |
| 1 | 0 | 1 | The sensing responder is a sensing transmitter, and may also perform monostatic sensing |
| 1 | 1 | 1 | The sensing responder is a sensing transmitter, is also a sensing receiver, and may also perform monostatic sensing |
| 0 | 1 | Reserved | The sensing responder is a sensing receiver (cannot perform monostatic sensing) |

It can be learned from Table 2 that, when a value of the B0 field is 0, the sensing responder is not a sensing transmitter, and therefore, the B35 field is a reserved (reserved) field. When the value of the B0 field is 1, the value of the B35 field may be 0 or 1. When the sensing responder is a sensing transmitter, the sensing initiator may indicate, by using the B35 field, whether the sensing responder may perform monostatic sensing. Therefore, the sensing transmitter may send a sensing PPDU, so that the sensing receiver receives the sensing PPDU and performs sensing measurement. In addition, the sensing transmitter may also receive the sensing PPDU in a current sensing measurement session and perform sensing measurement. In this way, the sensing transmitter can perform bistatic measurement and monostatic measurement in a same sensing measurement session, thereby obtaining more transmitter-receiver diversity gains.

Manner 3: A value of the monostatic sensing field is related to a value of the sensing receiver field. For example, when the sensing receiver field indicates that the sensing responder is a sensing receiver, the sensing responder may perform monostatic sensing. In other words, when the sensing responder has a role of a sensing receiver, the sensing initiator may assign a monostatic sensing role to the sensing responder; or when the sensing responder may perform monostatic sensing, the sensing responder may also be a sensing receiver. For descriptions of the B0 field, the B1 field, and the B35 field, refer to Manner 1. Details are not described herein again.

Table 3 shows an example of a relationship between values and meanings of the B0 field, the B1 field, and the B35 field.

**Table 3**

| B0 | B1 | B35 | Meaning |
|---|---|---|---|
| 0 | 1 | 0 | A sensing responder is a sensing receiver |
| 1 | 1 | 0 | The sensing responder is a sensing transmitter, and is also a sensing receiver |
| 0 | 1 | 1 | The sensing responder is a sensing receiver, and may also perform monostatic sensing |
| 1 | 1 | 1 | The sensing responder is a sensing transmitter, is also a sensing receiver, and may also perform monostatic sensing |
| 1 | 0 | Reserved | The sensing responder is a sensing transmitter (cannot perform monostatic sensing) |

It can be learned from Table 3 that, when a value of the B1 field is 0, the sensing responder is not a sensing receiver, and therefore, the B35 field is a reserved (reserved) field. When the value of the B1 field is 1, the value of the B35 field may be 0 or 1. When the sensing responder is a sensing receiver, the sensing initiator may indicate, by using the B35 field, whether the sensing responder may perform monostatic sensing. Therefore, the sensing receiver is allowed to perform monostatic sensing, which can improve a measurement diversity gain.

The sensing responder may learn, by using values of the B0 field, the B1 field, and the B35 field in the sensing measurement request frame, the role assigned by the sensing initiator to the sensing responder.

As shown in FIG. 6b, the sensing measurement parameters element may further include the sensing measurement report requested field (for example, the B2 field). In an example, when B35 is a reserved field, if the B1 field indicates that the sensing responder is a sensing receiver, the sensing measurement report requested field may indicate whether the sensing responder needs to feed back a sensing measurement report to the sensing initiator; or if the B1 field indicates that the sensing responder is not a sensing receiver, the sensing measurement report requested field is a reserved field. In another example, when B35 is not a reserved field, that is, the B35 field may indicate whether the sensing responder performs monostatic sensing, if the B1 field indicates that the sensing responder is not a sensing receiver, the sensing measurement report requested field is a reserved field. In other words, after the monostatic sensing field is added in the sensing measurement parameters element, because the sensing responder is in a monostatic sensing role, the sensing responder may obtain a monostatic sensing measurement result. However, the monostatic sensing role does not necessarily completely overlap the role of the sensing receiver. Therefore, a setting rule of the sensing measurement report requested field may be modified as follows: When the sensing responder is not a sensing receiver, and the sensing responder does not perform monostatic sensing, the B2 field is a reserved field. In other words, when the sensing responder has a single role of a sensing transmitter (is not a sensing receiver, and does not perform monostatic sensing), the B2 field is a reserved field.

602: The sensing responder sends a sensing measurement response (sensing measurement response) frame, and the sensing transmitter receives the sensing measurement response frame.

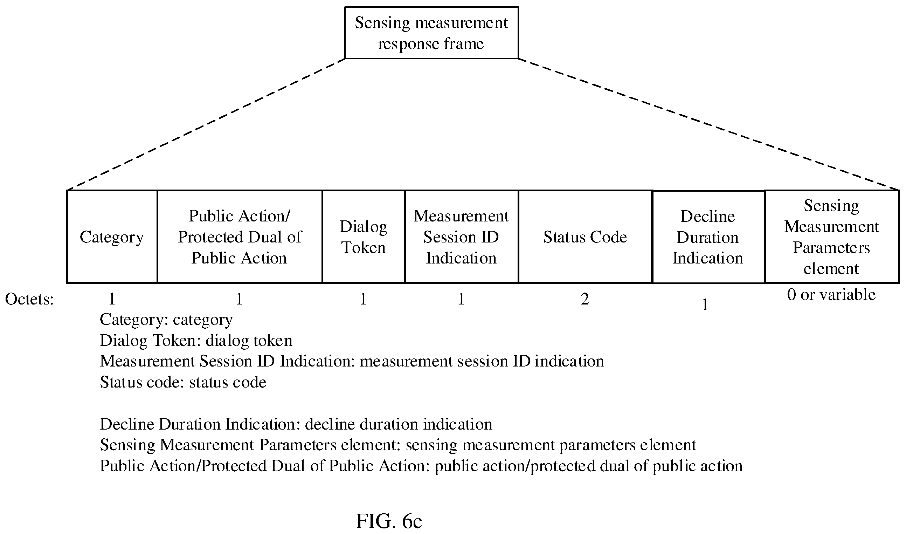

The sensing measurement response frame is a response frame of the sensing request frame. The sensing responder replies with the sensing measurement response frame, so that the sensing initiator learns that the sensing responder has received the sensing request frame. FIG. 6c is a diagram of a format of a sensing measurement response frame according to an embodiment of this application. As shown in FIG. 6c, the sensing measurement response frame may include at least one of the following: category (category), public action/protected dual of public action (public action/protected dual of public action), dialog token (dialog token), measurement session ID indication (measurement session ID indication), status code (status code), decline duration indication (decline duration indication), or sensing measurement parameters element (sensing measurement parameters element). For related descriptions of FIG. 6c, refer to a related standard or protocol. Details are not described herein again.

For example, the method shown in FIG. 6a, the sensing measurement request frame shown in FIG. 6b, or the sensing measurement response frame shown in FIG. 6c may be applied to an exchange procedure of a sensing measurement session (as shown in FIG. 2), or may be applied to another similar monostatic sensing scenario. This is not limited in this embodiment of this application. When the method shown in FIG. 6a is applied to the sensing measurement session phase shown in FIG. 2, the method shown in FIG. 6a may also be combined with the method shown in FIG. 5a. Details are not described herein again.

In this embodiment of this application, the monostatic indication information is added in the sensing measurement request frame, and the sensing initiator may assign more role types to the sensing responder, so that the sensing responder can support a sensing procedure of monostatic sensing, thereby further enriching a procedure of a sensing measurement session. In addition, monostatic sensing is used. Because the sensing PPDU is sent and received by a same device, the sensing PPDU is not affected by an error such as a carrier frequency offset or a sampling frequency offset, thereby improving accuracy of a sensing measurement result and improving sensing performance.

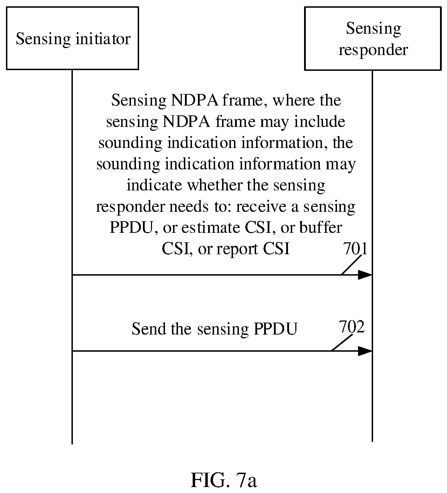

FIG. 7a is a schematic flowchart of a sensing communication method according to an embodiment of this application. As shown in FIG. 7a, the method includes the following steps.

701: A sensing initiator sends a sensing NDPA frame, and a sensing responder receives the sensing NDPA frame. The sensing NDPA frame may include sounding indication information. The sounding indication information may indicate whether the sensing responder needs to: receive a sensing PPDU, or estimate CSI, or buffer CSI, or report CSI.

In this embodiment of this application, the sounding indication information is specific to a current NDPA measurement phase. For example, the sounding indication information may indicate whether the sensing responder needs to perform at least one of the following in a phase corresponding to the sensing NDPA frame: receiving the sensing PPDU, estimating the CSI, buffering the CSI, or reporting the CSI.

702: The sensing initiator sends the sensing PPDU.

Usually, in the NDPA measurement phase, the sensing initiator (for example, an AP) sends the sensing NDPA frame and an SI2SR NDP to one or more sensing responders (which are also sensing receivers), and the sensing responders (which are also sensing receivers) may estimate the channel state information (channel state information, CSI) by receiving the SI2SR NDP, and report the CSI, for example, may report the CSI by using a sensing measurement report frame, or may report the CSI by using an upper layer.

However, in this embodiment of this application, the sensing initiator may indicate, to the sensing responder based on the sounding indication information, a behavior such as whether the sensing PPDU needs to be received. For example, the sensing PPDU may include the SI2SR NDP. For example, the sensing initiator may separately send the sounding indication information to a plurality of sensing responders, and indicate, based on the sounding indication information, whether each sensing responder needs to receive the sensing PPDU. For example, in the plurality of sensing responders, a part of the sensing responders may need to receive the sensing PPDU, and the other part of the sensing responders does not need to receive the sensing PPDU. For another example, all of the plurality of sensing responders may receive the sensing PPDU, or all of the plurality of sensing responders may not receive the sensing PPDU.

In an example, when the sounding indication information indicates that the sensing responder does not need to receive the sensing PPDU, the sensing responder may not perform at least one of the following: receiving the sensing PPDU, estimating the CSI, buffering the CSI, or reporting the CSI. In this way, resources of the sensing responder can be effectively saved, and power consumption can be reduced. For example, the sensing responder may not receive the sensing PPDU, and therefore, does not estimate the CSI, buffer the CSI, or report the CSI. For another example, the sensing responder may receive the sensing PPDU, and estimate the CSI, but does not buffer the CSI and does not report the CSI. For another example, the sensing responder may receive the sensing PPDU, but does not estimate the CSI, does not buffer the CSI, and does not report the CSI. In this example, for a same sensing measurement exchange, the sensing responder does not receive the sensing PPDU. For example, the sensing initiator may perform monostatic sensing. For example, the AP may perform monostatic sensing. After receiving the sensing NDPA frame, the STA may not receive the sensing PPDU. For example, the sounding indication information indicates that the sensing responder does not need to receive the sensing PPDU, or may implicitly indicate that the sensing initiator performs monostatic sensing. For ease of description, in this embodiment of this application, in some examples, an example in which the sounding indication information indicates whether the sensing responder needs to receive the sensing PPDU is used for description. However, this should not be construed as a limitation on this embodiment of this application.

In another example, when the sounding indication information indicates that the sensing responder receives the sensing PPDU, the sensing responder may receive the sensing PPDU, estimate the CSI, buffer the CSI, and report the CSI. In this example, for a same sensing measurement exchange, for example, the sensing initiator may perform monostatic sensing. Therefore, sensing measurement may include SI2SR-based measurement by the sensing responder and monostatic sensing-based measurement by the sensing initiator. Therefore, after obtaining a monostatic sensing measurement result and a sensing measurement result fed back by the sensing responder, the sensing initiator may further compare the two sensing measurement results. For another example, the sensing initiator may perform monostatic sensing. In this case, measurement is SI2SR-based measurement by the sensing responder.

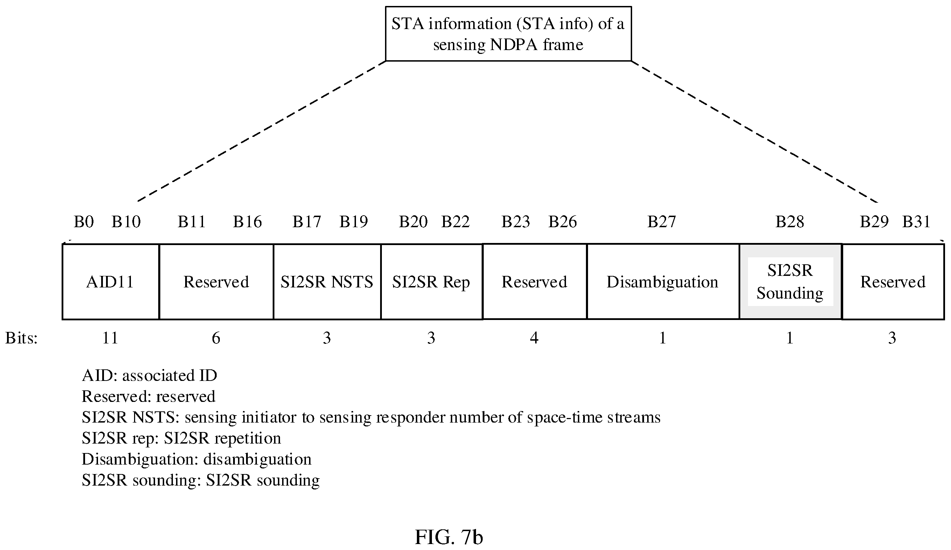

For example, the sounding indication information may be carried in an SI2SR sounding (SI2SR sounding) field in a STA information (STA info) field in the sensing NDPA frame. FIG. 7b is a diagram of a format of a STA information field of a sensing NDPA frame according to an embodiment of this application. As shown in FIG. 7b, the STA information field may include at least one of the following: associated ID (associated ID, AID) 11, SI2SR number of space-time streams (number of space-time streams, NSTS) (or SI2SR number of spatial streams (number of spatial streams, NSS)), SI2SR repetition (SI2SR rep), disambiguation (disambiguation), and SI2SR sounding (SI2SR sounding). FIG. 7b shows an example in which the SI2SR sounding field is located in B28, but should not be construed as a limitation on this embodiment of this application. The AID11 field may indicate an identifier of the sensing responder. FIG. 7b shows AID11 as an example, but should not be construed as a limitation on this embodiment of this application. A value of the AID11 field shown in FIG. 7b may be less than 2008. Certainly, when the STA information field includes an AID12 field, a value of the AID12 field may change accordingly. This is not limited. Names, a sequence, and lengths of fields shown in FIG. 7b are merely examples, and should not be construed as a limitation on this embodiment of this application.

For example, a value of the B28 field is 1, and the field may indicate that the sensing responder needs to receive sensing SI2SR. For example, the sensing responder needs to receive sensing SI2SR, estimate the CSI, buffer the CSI, and report the CSI. For another example, a value of the B28 field is 0, and the field may indicate that the sensing responder does not need to receive sensing SI2SR. For example, the sensing responder does not need to receive sensing SI2SR, does not need to estimate the CSI, does not need to buffer the CSI, and does not need to report the CSI.

For example, the method shown in FIG. 7a may be applied to the NDPA measurement phase in the TB measurement exchange (as shown in FIG. 2), or may be applied to another similar monostatic sensing scenario. This is not limited in this embodiment of this application. When the method shown in FIG. 7a is applied to the NDPA measurement phase in the sensing measurement exchange phase shown in FIG. 2, the method shown in FIG. 7a may also be combined with the method shown in FIG. 5a, or may be combined with the method shown in FIG. 6a. Details are not described herein again.

In this embodiment of this application, the sensing initiator indicates, by using the sensing NDPA frame, a behavior such as whether the sensing responder receives the sensing PPDU. For example, the sensing responder may not receive the sensing PPDU, or the like, thereby saving resources and reducing power consumption.

In a TF sounding phase, a sensing initiator (for example, an AP) may send a trigger frame, to trigger one or more sensing responders to send sensing PPDUs, and the sensing initiator receives the sensing PPDUs to perform channel estimation and obtain CSI. In embodiments of this application, a monostatic sensing mode may be added in the TF sounding phase. The monostatic sensing mode may be integrated with an existing TF sounding mode, or may exist independently. Details are described below.

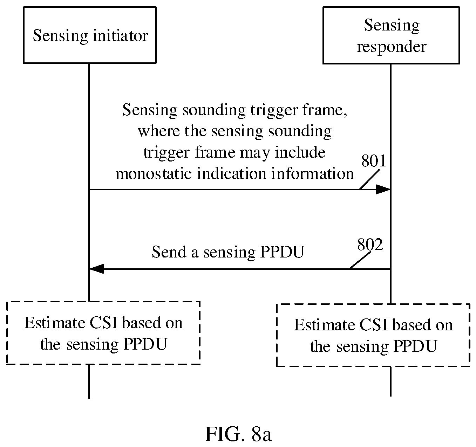

FIG. 8a is a schematic flowchart of a sensing communication method according to an embodiment of this application. As shown in FIG. 8a, the method includes the following steps.

801: A sensing initiator sends a sensing sounding trigger frame, and a sensing responder receives the sensing sounding trigger frame. The sensing sounding trigger frame may include monostatic indication information.

For descriptions of the monostatic indication information, refer to the descriptions of step 601 in FIG. 6a. Details are not described herein again. The monostatic indication information shown in FIG. 8a may be specific to a current TF measurement phase. For example, in this embodiment of this application, the monostatic indication information may indicate whether the sensing responder performs monostatic sensing in a phase corresponding to the sensing sounding trigger frame. For example, the sensing initiator may separately send the sounding trigger frame to one or more sensing responders.

802: The sensing responder sends a sensing PPDU.

The step performed by the sensing responder/sensing initiator may vary with specific content of the monostatic indication information.

### Implementation 1:

A user information (user info) field of the sensing sounding trigger frame includes the monostatic indication information.

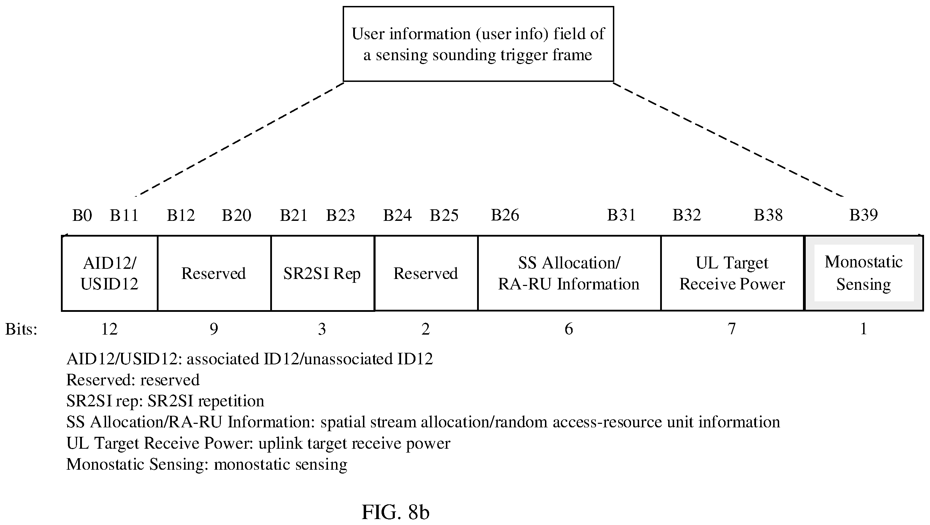

For example, FIG. 8b is a diagram of a format of a user information field of a sensing sounding trigger frame according to an embodiment of this application. As shown in FIG. 8b, the user information field may include at least one of the following: AID12/USID12, SR2SI repetition (SR2SI rep), spatial stream (spatial stream, SS) allocation/random access-resource unit (random access-resource unit, RA-RU) information, uplink target receive power (uplink target receive power), or monostatic sensing (monostatic sensing). AID12/USID12 may indicate an identifier of the sensing responder. FIG. 8b shows AID12 or USID12 as an example, but should not be construed as a limitation on this embodiment of this application. A value of AID12/USID12 shown in FIG. 8b may not be equal to a value of another existing use. AID12/USID12 shown in FIG. 8b may not be equal to 2008, or AID12/USID12 may not be equal to 2009, or the like. Examples are not enumerated herein. In this embodiment of this application, quantities, a sequence, and names of bits occupied by fields shown in FIG. 8b are not limited.

In an example, when a value of the monostatic sensing field is 1, it indicates that the sensing responder may perform monostatic sensing. For example, the sensing responder may perform the following steps: sending an SR2SI NDP, receiving the SR2SI NDP, estimating CSI, and reporting the CSI. As shown in FIG. 8a, the sensing responder may send the sensing PPDU. As shown in a dashed part in FIG. 8a, the sensing responder may estimate the CSI based on the sensing PPDU.

In another example, when a value of the monostatic sensing field is 0, it indicates that the sensing responder may not perform monostatic sensing. For example, the sensing responder may send an SR2SI NDP. The sensing initiator receives the SR2SI NDP, and estimates the CSI based on the SR2SI NDP. As shown in FIG. 8a, the sensing responder may send the sensing PPDU. As shown in a dashed part in FIG. 8a, the sensing initiator may estimate the CSI based on the sensing PPDU.

In this implementation, the sensing initiator may flexibly adjust, based on the monostatic indication information, a behavior of a sensing responder participating in a current sensing measurement exchange, for example, schedule the sensing responder to serve as a transmitter of the SR2SI NDP, or schedule the sensing responder to perform monostatic sensing. For example, in a TF measurement phase of a TB measurement exchange, an AP may schedule a part or all of sensing responders to send the SR2SI NDP, or may schedule a part or all of sensing responders to perform monostatic sensing. The user information field carries the monostatic indication information, so that a sensing responder corresponding to the user information field can be flexibly scheduled to perform monostatic sensing.

### Implementation 2:

A common information (common info) field of the sensing sounding trigger frame includes the monostatic indication information. The monostatic indication information is added in the common information field, so that the sensing initiator can schedule, based on the sensing sounding trigger frame, all sensing responders to perform monostatic sensing. All the sensing responders shown herein are all sensing responders in a current TF sounding phase.

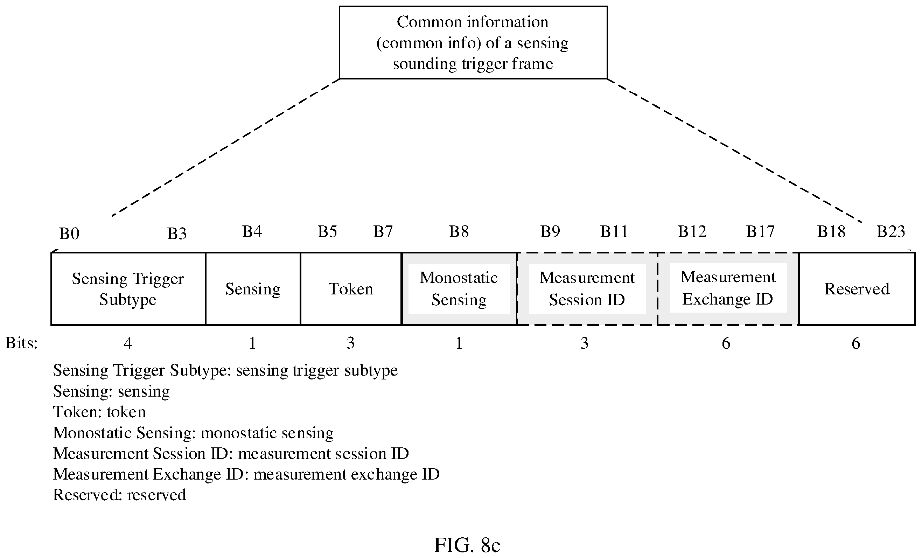

For example, FIG. 8c is a diagram of a format of a common information field of a sensing sounding trigger frame according to an embodiment of this application. As shown in FIG. 8c, the common information field includes at least one of the following: sensing trigger subtype (sensing trigger subtype), sensing (sensing), token (token), and monostatic sensing (monostatic sensing). For example, the common information field may further include at least one of a measurement session ID field or a measurement exchange ID field. The measurement session ID field may indicate an ID of a sensing measurement session. For example, the measurement session ID field may identify a current sensing measurement session. The measurement exchange ID field may indicate an ID of a sensing measurement exchange. For example, the measurement exchange ID field may identify a current sensing measurement exchange. The common information field shown in FIG. 8c may also be referred to as a trigger independent common information (trigger dependent common Info) field. A name of the field is not limited in this embodiment of this application.

The measurement session ID field or the measurement exchange ID field is added in the common information field, so that the sensing responder that performs monostatic sensing can learn that current monostatic sensing is sensing measurement of a sensing measurement exchange, indicated by a measurement exchange ID field, in a sensing measurement session that is indicated by the measurement session ID field and that is established by the sensing responder with the sensing initiator. For example, in a reporting phase, the sensing responder that performs monostatic sensing may also include the measurement session ID field or the measurement exchange ID field in a sensing measurement report frame. Therefore, the sensing initiator may learn of a sensing measurement session to which a sensing measurement result carried in the sensing measurement report frame belongs, and a sensing measurement exchange.

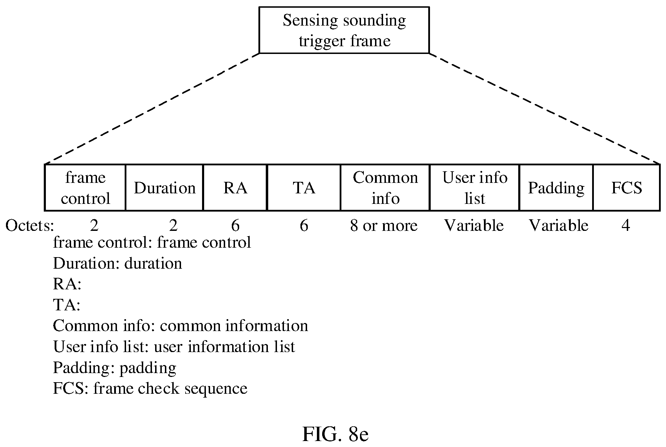

FIG. 8e is a diagram of a format of a sensing sounding trigger frame according to an embodiment of this application. As shown in FIG. 8e, the sensing sounding trigger frame may include a common information field and a user information list, and the user information list may include one or more user information fields. For descriptions of the sensing sounding trigger frame shown in FIG. 8e, refer to a related standard or protocol. Details are not described herein again.

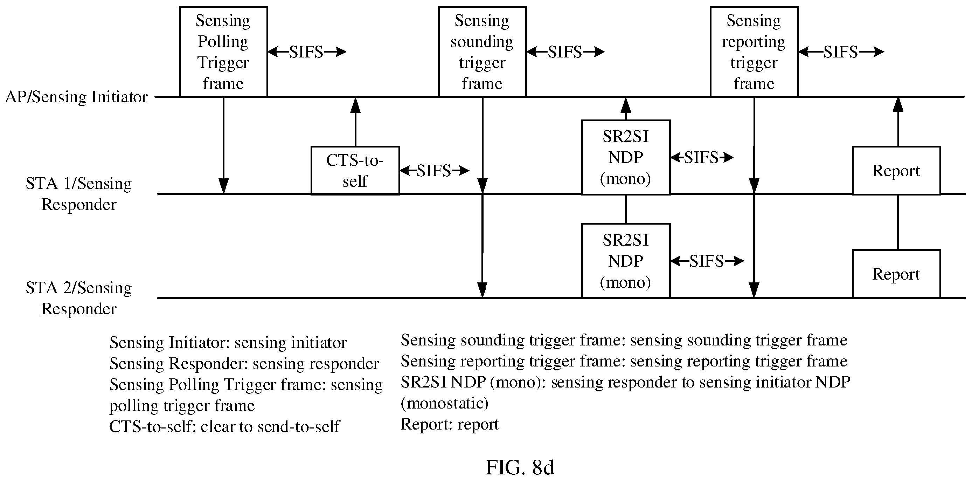

For example, FIG. 8d is a schematic flowchart of a TB sensing measurement exchange according to an embodiment of this application. As shown in FIG. 8d, an AP is a sensing initiator, and a STA 1 and a STA 2 are sensing responders. As shown in FIG. 8d, the AP separately sends a sensing sounding trigger frame to the STA 1 and the STA 2, so that the STA 1 and the STA 2 can respectively learn, based on monostatic indication information in the sensing sounding trigger frame, of whether the STA 1 and the STA 2 perform monostatic sensing. In an example, the AP may indicate, based on the sensing sounding trigger frame, both the STA 1 and the STA 2 to perform monostatic sensing. For example, the STA 1 or the STA 2 may separately send a sensing PPDU, receive a respectively sent sensing PPDU, and estimate CSI. In another example, the AP may indicate, based on the sensing sounding trigger frame, the STA 1 to perform monostatic sensing. For example, the STA 2 performs bistatic sensing. Therefore, the STA 1 may send a sensing PPDU, receive the sensing PPDU, estimate CSI, and the like. The STA 2 may send a sensing PPDU, and the AP receives the sensing PPDU, estimates CSI, and the like. Examples are not enumerated herein. For other descriptions of FIG. 8d, refer to FIG. 3a, and the like. Details are not described herein again.

The common information field carries the monostatic indication information, to indicate all sensing responders to perform monostatic sensing, or indicate all sensing responders not to perform monostatic sensing, thereby reducing signaling overheads and efficiently managing behaviors of all sensing responders.

Implementation 1 and Implementation 2 are shown by using an example in which the sensing sounding trigger frame is a sensing SR2SI sounding trigger frame and the sensing PPDU is an SR2SI NDP. The following uses an example in which the sensing sounding trigger frame is a sensing SR2SR sounding trigger (SR2SR sounding trigger) frame and the sensing PPDU is an SR2SR NDP for description.

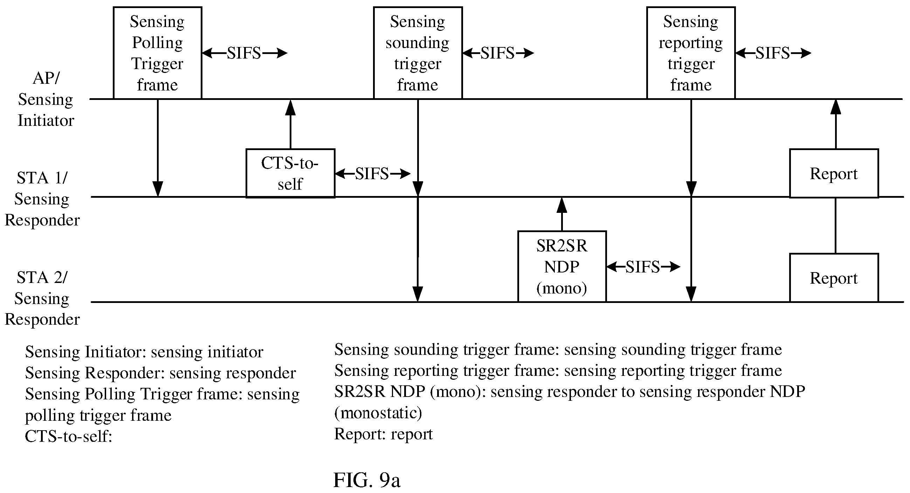

For example, FIG. 9a is a schematic flowchart of a TB sensing measurement exchange according to an embodiment of this application. As shown in FIG. 9a, in a TF sounding phase, an AP may separately send a sensing sounding trigger frame (for example, which may be a sensing SR2SR sounding trigger frame) to a STA 1 and a STA 2, and then, the STA 2 may send an SR2SR NDP to the STA 1. In an example, the STA 1 may estimate CSI based on the SR2SR NDP, and report the CSI. In another example, the STA 2 may perform monostatic sensing. The STA 2 may receive the SR2SR NDP, estimate CSI based on the SR2SR NDP, and report the CSI. In still another example, the STA 2 may perform monostatic sensing. For example, the STA 2 sends the SR2SR NDP, receives the SR2SR NDP, estimates CSI, and reports the CSI. In addition, the STA 1 also receives the SR2SR NDP, estimates the CSI, reports the CSI, and the like. For other descriptions of FIG. 9a, refer to FIG. 3a, and the like. Details are not described herein again.

### Implementation 3:

At least one of a transmitter user information (transmitter user info) field or a receiver user information (receiver user info) field in the sensing sounding trigger frame includes the monostatic indication information.

The transmit user information field is information indicated by the sensing initiator to a sensing transmitter, and the receiver user information field is information indicated by the sensing initiator to a sensing receiver. In other words, the sensing responder may learn, based on the transmitter user information field and the receiver user information field, of whether the sensing responder is a sensing transmitter or a sensing receiver in current SR2SR sounding (SR2SR sounding). Certainly, the transmitter user information shown herein may also be referred to as transmit user information, and the receiver user information may also be referred to as receive user information, or the like. Names of fields are not limited in this embodiment of this application.

In this embodiment of this application, the monostatic indication information is added in the transmitter user information field, so that not only information about the sensing transmitter can be indicated, but also whether the sensing initiator performs monostatic sensing can be indicated. Alternatively, the monostatic indication information is added in the receiver user information field, so that not only information about the sensing receiver can be indicated, but also whether the sensing receiver performs monostatic sensing can be indicated.

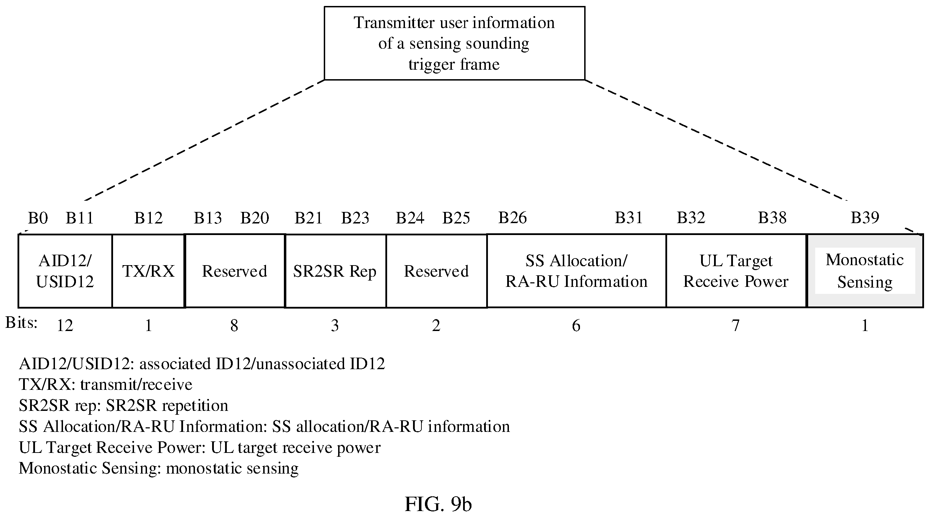

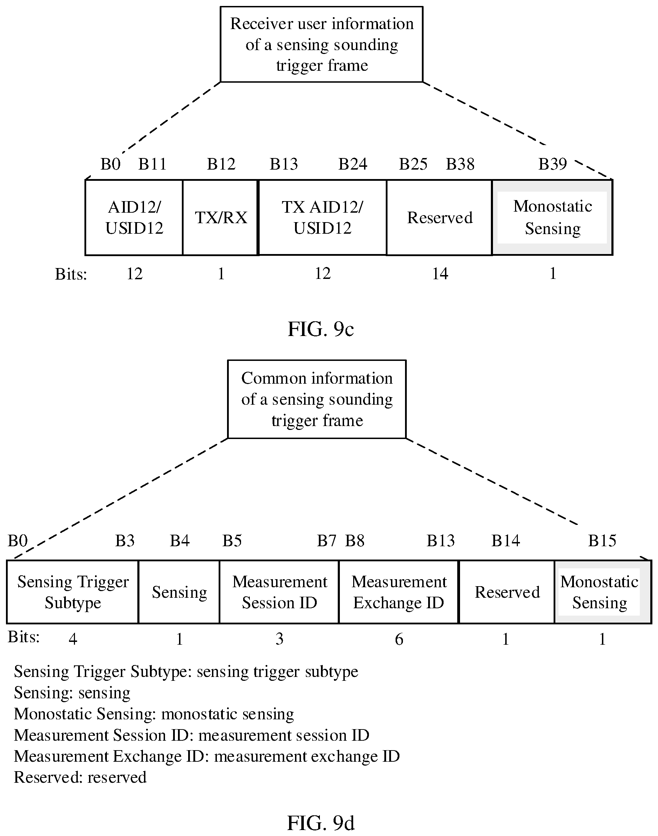

For example, FIG. 9b is a diagram of a format of a transmitter user information field of a sensing sounding trigger frame according to an embodiment of this application. FIG. 9c is a diagram of a format of a receiver user information field of a sensing sounding trigger frame according to an embodiment of this application. A transmitter/receiver (transmitter/receiver, TX/RX) in FIG. 9b and FIG. 9c may indicate whether the sensing responder is a sensing transmitter or a sensing receiver. If the sensing responder is a sensing transmitter, the sensing responder may send the sensing PPDU based on information in the transmitter user information field. If the sensing responder is a sensing receiver, the sensing responder may receive the sensing PPDU based on the information in the receiver user information field. For descriptions of other fields in FIG. 9b and FIG. 9c, refer to a related standard or protocol. Details are not described herein again.

The sensing initiator may further indicate, by using a monostatic sensing field, whether the sensing responder performs monostatic sensing. For example, the sensing responder may be a sensing transmitter, and may also perform monostatic sensing. In this case, the sensing responder may send the sensing PPDU, receive the sensing PPDU, estimate CSI, and the like. For another example, the sensing responder may be a sensing receiver, and may also perform monostatic sensing. In this case, the sensing responder may send the sensing PPDU, receive the sensing PPDU, estimate CSI, and the like. For another example, the sensing responder may not perform monostatic sensing, for example, is a sensing transmitter or a sensing receiver.

The transmitter user information field or the receiver user information field carries the monostatic indication information, so that the sensing responder may be flexibly scheduled to perform monostatic sensing.

### Implementation 4:

A common information (common info) field of the sensing sounding trigger frame includes the monostatic indication information. For example, a trigger independent common information field in the sensing SR2SR sounding trigger frame includes the monostatic indication information.

For example, FIG. 9d is a diagram of a format of a common information field of a sensing sounding trigger frame according to an embodiment of this application. As shown in FIG. 9d, the common information field may include a monostatic sensing field. The sensing initiator may schedule, by using the monostatic sensing field, all sensing responders to perform monostatic sensing. For example, in FIG. 9a, an AP may schedule both a STA 1 and a STA 2 to perform monostatic sensing. When the sensing initiator indicates, by using the monostatic sensing field in the common information field, the sensing responder to perform monostatic sensing or not to perform monostatic sensing, for example, a function implemented by a transmitter user information field or a receiver user information in the sensing sounding trigger frame may be different from that in FIG. 9b or FIG. 9c. For example, the transmitter user information field may allocate a sending resource, for example, a number of LTF repetitions, a number of spatial streams, or a power. The receiver user information field may be a reserved field. Specific functions of the transmitter user information field and the receiver user information field are not limited in this embodiment of this application.

The common information field carries the monostatic indication information, to indicate all sensing responders to perform monostatic sensing, or indicate all sensing responders not to perform monostatic sensing, thereby reducing signaling overheads and efficiently managing behaviors of all sensing responders.

Implementation 1 to Implementation 4 are shown by using an example in which a sensing SR2SI sounding trigger frame carries the monostatic indication information, or a sensing SR2SR sounding trigger frame carries the monostatic indication information. For example, Implementation 1 to Implementation 4 may be considered as a hybrid mode of SR2SI and monostatic sensing, or a hybrid mode of SR2SR and monostatic sensing. The following further provides a separate mode. For example, a sounding type is added. For example, a new trigger frame may be specially used for monostatic sensing.

### Implementation 5:

Table 4 shows an example of a relationship between a value and a meaning of a sensing trigger subtype. A relationship between a value and a meaning in Table 4 is merely an example, and should not be construed as a limitation on this embodiment of this application. For example, Table 4 is used as an example. A value of a sensing trigger subtype field in the sensing sounding trigger frame shown in FIG. 8c may be 1. For example, Table 4 is used as an example. A value of a sensing trigger subtype field in the sensing sounding trigger frame shown in FIG. 9d may be 4. However, in Implementation 5, a value of a sensing trigger subtype field in the sensing sounding trigger frame may be 5 (which is merely an example). That a value corresponding to monostatic sounding is 5 in Table 4 is merely an example. For example, monostatic sounding may alternatively have another value in 6 to 15. Examples are not enumerated herein. The name of monostatic sounding shown in Table 4 is merely an example. For example, the monostatic sounding may also be referred to as monostatic sounding triggering or monostatic sensing. Examples are not enumerated herein.

**Table 4**

| Sensing trigger subtype field encoding (Sensing Trigger Subtype field encoding) | Sensing trigger frame variant (Sensing Trigger frame variant) |
|---|---|
| 0 | Sensing polling (Sensing Polling) |
| 1 | SR2SI sounding (SR2SI Sounding) |
| 2 | Sensing threshold-based reporting (Sensing Threshold-based Reporting) |
| 3 | Sensing reporting (Sensing Reporting) |
| 4 | SR2SR sounding (SR2SR Sounding) |
| 5 | Monostatic sounding (Monostatic Sounding) |
| 6-15 | Reserved |

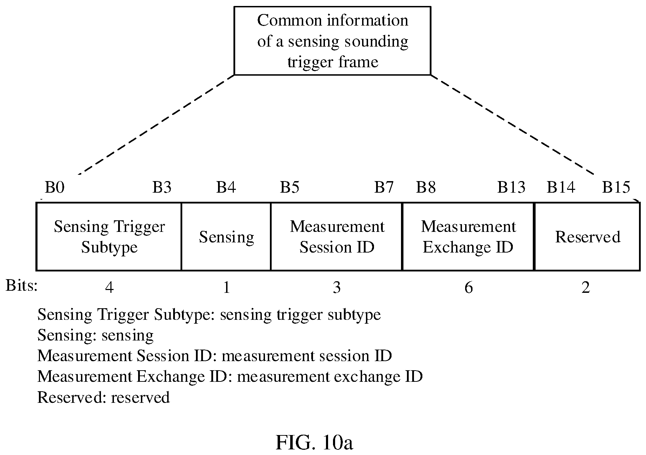

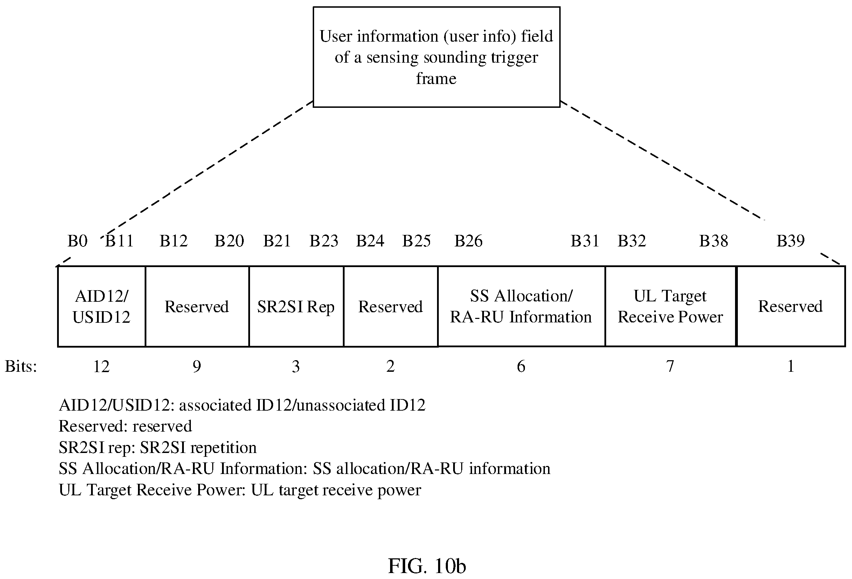

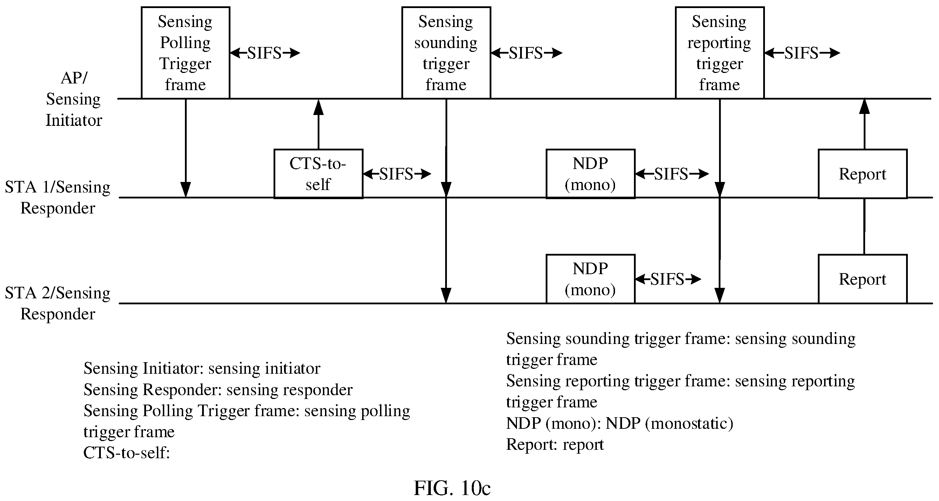

For example, the sensing sounding trigger frame may be used to schedule (or control or indicate) a plurality of sensing apparatuses to perform monostatic sensing. For example, resources (for example, a number of LTF repetitions or a number of spatial streams) may be allocated to different sensing apparatuses by using the sensing sounding trigger frame. For example, FIG. 10a is a diagram of a format of a common information field of a sensing sounding trigger frame according to an embodiment of this application. FIG. 10b is a diagram of a format of a user information field of a sensing sounding trigger frame according to an embodiment of this application. For example, the sensing sounding trigger frame may be referred to as a sensing monostatic sounding trigger frame. A specific name of the frame is not limited in this embodiment of this application. SR2SI shown in FIG. 10b is merely an example. In a specific implementation, the sensing PPDU may be an SR2SI NDP, an SR2SR NDP, or another NDP. This is not limited in this embodiment of this application. Similarly, an NDP shown in FIG. 10c is merely an example, and a type of the NDP is not limited. For descriptions of FIG. 10a and FIG. 10b, refer to the foregoing descriptions of the sensing sounding trigger frame. Details are not described herein again.

For example, FIG. 10c is a diagram of a process of a TB measurement exchange according to an embodiment of this application. As shown in FIG. 10c, an AP serves as a sensing initiator, and may send a sensing polling trigger frame to a STA 1. The sensing polling trigger frame is optional. Therefore, the AP may not send the sensing polling trigger frame to a STA 2. Certainly, the AP may alternatively send the sensing polling trigger frame to the STA 2. In a sounding phase, the AP may separately send a sensing sounding trigger frame (for example, a sensing monostatic sounding trigger frame) to the STA 1 and the STA 2. After receiving the sensing sounding trigger frame, the STA 1 and the STA 2 may perform monostatic sensing. For example, the STA 1 sends an NDP, receives the NDP, estimates CSI, and reports the CSI. For another example, the STA 2 sends an NDP, receives the NDP, estimates CSI, and reports the CSI. For descriptions of other frames in FIG. 10c, refer to FIG. 3a, and the like. Details are not described herein again.

For example, the method shown in FIG. 8a may be applied to the TF sounding phase in the TB measurement exchange (as shown in FIG. 2), or may be applied to another similar monostatic sensing scenario. This is not limited in this embodiment of this application. When the method shown in FIG. 8a is applied to the TF sounding phase in the sensing measurement exchange phase shown in FIG. 2, the method shown in FIG. 8a may also be combined with the method shown in FIG. 5a, or may be combined with the method shown in FIG. 6a. Details are not described herein again.

In this embodiment of this application, the sounding trigger frame used for monostatic sensing is added, so that the sensing initiator can schedule all devices participating in sensing to perform monostatic sensing. This is easy to implement, and monostatic sensing can improve sensing performance.

For a non-TB measurement exchange, a STA usually serves as a sensing initiator. When monostatic sensing can be implemented in the non-TB measurement exchange, an SI2SR NDP and an SR2SI NDP may be configured by using a sensing NDPA frame sent by the STA (sensing initiator), and the sensing NDPA frame may indicate whether a sensing responder performs monostatic sensing, or whether to receive the SI2SR NDP.

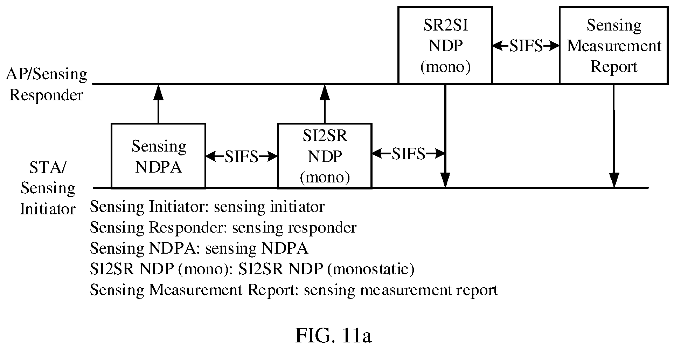

FIG. 11a is a diagram of a non-TB measurement exchange according to an embodiment of this application. As shown in FIG. 11a, a sensing initiator may send a sensing NDPA frame to a sensing responder.

For example, the sensing NDPA frame may include at least one of sounding indication information or monostatic indication information. For descriptions of the sounding indication information and the monostatic indication information, refer to the foregoing descriptions. Details are not described herein again. For example, a STA may indicate, based on sounding indication information, whether an AP needs to receive a sensing PPDU. For another example, a STA may indicate, based on monostatic indication information, whether an AP may perform monostatic sensing.

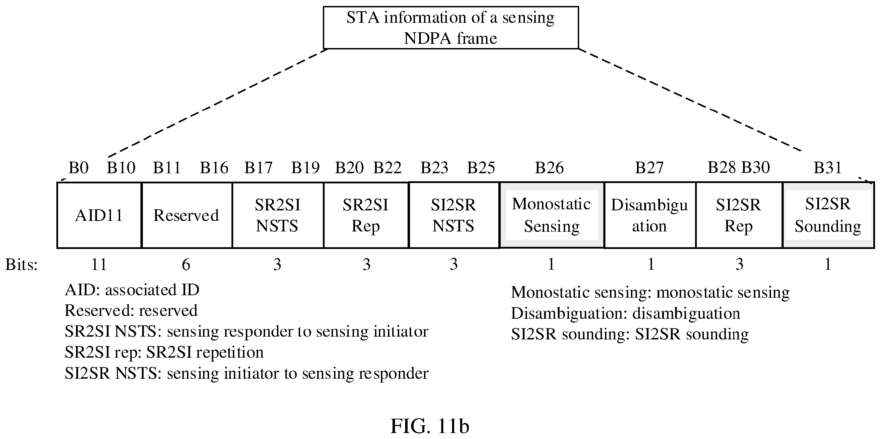

For example, FIG. 11b is a diagram of a format of a STA information field of a sensing NDPA frame according to an embodiment of this application. As shown in FIG. 11b, the STA information field may include: AID11, SR2SI NSTS, SR2SI repetition, SI2SR NSTS, monostatic sensing, disambiguation, SI2SR repetition, and SI2SR sounding. For descriptions of the monostatic sensing field shown in FIG. 11b, refer to the foregoing descriptions, for example, those in FIG. 6b. For descriptions of the SI2SR sounding field, refer to the descriptions of FIG. 7b. Details are not described herein again.

For example, if a value of a B26 field is 1, it indicates that the sensing responder (for example, the AP) may perform monostatic sensing. For example, the sensing responder may send an SR2SI NDP, receive the SR2SI NDP, and estimate CSI. For another example, if a value of a B26 field is 0, it indicates that the sensing responder does not perform monostatic sensing. For example, if a value of a B31 field is 1, it indicates that the sensing responder may receive an SI2SR NDP. For example, the sensing responder may receive the SI2SR NDP, estimate CSI, buffer the CSI, and report the CSI. If a value of a B31 field is 0, it indicates that the sensing responder may not receive an SI2SR NDP.

In an example, when a value of a B26 field is 1 and a value of a B31 field is 0, it indicates that the sensing responder may perform monostatic sensing, and the sensing responder may not receive an SI2SR NDP. For example, the AP may perform monostatic sensing, and the STA may also perform monostatic sensing. For example, the STA may configure, by using the SR2SI NSTS field and the SR2SI Rep field, a format of an SR2SI NDP sent by the AP (for example, the AP may send the SR2SI NDP and receive the SR2SI NDP, to complete monostatic sensing, and the STA may choose to receive or not receive the SR2SI NDP). Because the AP may not receive the SI2SR NDP (for example, the STA performs self-sending and self-receiving), optionally, the SI2SR NSTS field and the SI2SR Rep field may be set to reserved (or referred to as reserved).

In another example, when a value of B26 is 1 and a value of B31 is 1, it indicates that the sensing responder may perform monostatic sensing, and the sensing responder may further receive an SI2SR NDP. For example, the AP may perform monostatic sensing. For example, the AP sends an SR2SI NDP, receives the SR2SI NDP, and estimates CSI based on the SR2SI NDP. In addition, the STA sends an SI2SR NDP, and the AP receives the SI2SR NDP, estimates CSI based on the SI2SR NDP, and the like. In other words, the AP may obtain two sensing measurement results. For example, the AP may feed back the sensing measurement result to the STA by using a sensing measurement report frame or an upper layer. For example, the STA may configure, by using the SR2SI NSTS field and the SR2SI Rep field, a format of the SR2SI NDP sent by the AP (for example, the AP may send the SR2SI NDP and receive the SR2SI NDP, to complete monostatic sensing, and the STA may choose to receive or not receive the SR2SI NDP). For example, the STA may configure, by using the SI2SR NSTS field and the SI2SR Rep field, a format of the SI2SR NDP sent by the STA.

In still another example, when a value of a B26 field is 0 and a value of a B31 field is 1, it indicates that the sensing responder does not perform monostatic sensing, but the sensing responder may receive an SI2SR NDP. For example, the STA may configure, by using the SR2SI NSTS field and the SR2SI Rep field, a format of an SR2SI NDP sent by the AP. If the STA serves as a sensing initiator and does not need to measure a channel between the AP and the STA, the SR2SI NSTS field and the SR2SI Rep field may be set to 0. For example, the STA may configure, by using the SI2SR NSTS field and the SI2SR Rep field, a format of an SI2SR NDP sent by the STA.

Optionally, if both the SR2SI NSTS field and the SR2SI repetition field are set to 0, it indicates that no SR2SI NDP is configured in the sensing NDPA frame. In this case, the SR2SI NDP is a third NDP. For example, B26 needs to be reserved. In other words, if an NDP sent by the AP to the STA is a third NDP, the NDP does not need to be used for monostatic sensing.

For example, the method shown in FIG. 11a may be applied to a process of a non-TB measurement exchange (as shown in FIG. 2), or may be applied to another similar monostatic sensing scenario. This is not limited in this embodiment of this application. When the method shown in FIG. 11a is applied to the sensing measurement exchange phase shown in FIG. 2, the method shown in FIG. 11a may also be combined with the method shown in FIG. 5a, or may be combined with the method shown in FIG. 6a. Details are not described herein again.

According to the technical solutions provided in embodiments of this application, compatibility of monostatic sensing is effectively implemented, so that the sensing initiator can flexibly invoke the sensing responder to perform monostatic sensing.

For related descriptions of an SBP procedure, refer to FIG. 4. Details are not described herein again. In other words, the SBP procedure shown in this embodiment of this application may be the same as the SBP procedure shown in FIG. 4. Repeated parts are not described again. In an example, the SBP procedure may be an exchange procedure between an SBP request frame and an SBP response frame shown in FIG. 4, or the SBP procedure not only may include an exchange procedure between an SBP request frame and an SBP response frame, but also may include an exchange procedure between a sensing measurement request frame and a sensing measurement response frame. Optionally, the SBP procedure may further include a procedure of a sensing measurement exchange, a termination procedure, or the like. Whether a sensing measurement session phase and a sensing measurement exchange phase belong to the SBP procedure is not limited in this embodiment of this application. For example, when the SBP procedure includes the sensing measurement session phase or the sensing measurement exchange phase, for related descriptions of a sensing measurement session, refer to the descriptions of FIG. 6a. For related descriptions of the sensing measurement exchange phase, refer to the descriptions of FIG. 7a or FIG. 8a. Details are not described herein again.

Usually, the SBP request frame may include an SBP parameters element (SBP parameters element), and the SBP parameters element may be used by an SBP initiator to provide, to an SBP responder (AP), a recommended parameter for establishing a corresponding sensing measurement session. For example, the SBP parameters element may include a sensing responder role bitmap (sensing responder role bitmap). For example, the sensing responder role bitmap may be used to assign a role of the sensing responder. Alternatively, the sensing responder role bitmap may be a role, of a sensing responder, recommended (or required or indicated) by the SBP initiator (the STA 1 shown in FIG. 4) to the SBP responder (the AP shown in FIG. 4, which is also a sensing initiator). For example, the role of the sensing responder may be a sensing transmitter and/or a sensing receiver.

Table 5 shows an example of a relationship between a value and a meaning of a sensing responder role bitmap.

**Table 5**

| Encoding | Meaning |
|---|---|
| 00 | Reserved (Reserved) |
| 01 | Sensing receiver (Sensing receiver) |
| 10 | Sensing transmitter (Sensing transmitter) |
| 11 | Sensing transmitter and sensing receiver (Sensing receiver and sensing transmitter) |

However, in this embodiment of this application, monostatic sensing may be introduced in the SBP procedure. For example, the sensing responder role bitmap in the SBP parameters element included in the SBP request frame may occupy 3 bits. For example, a monostatic sensing bit may be added in the sensing responder role bitmap. The bit may indicate whether the sensing responder may perform monostatic sensing, or the bit may indicate whether to assign a monostatic sensing role to the sensing responder. For descriptions of the monostatic sensing bit, refer to the foregoing descriptions of the monostatic indication information. Details are not described herein again. The manner of indicating the role of the sensing responder by using the bitmap in this embodiment of this application is merely an example. In a specific implementation, the role may be indicated by using an index. Details are not listed herein.

In an example, a value of the monostatic sensing bit is unrelated to the values of the 2 bits in Table 5.

The following content is used as an example. The sensing responder role bitmap occupies 3 bits. A first bit (for example, B0) indicates whether the sensing responder is a sensing transmitter, a second bit (for example, B1) indicates whether the sensing responder is a sensing receiver, and a third bit (B3) indicates whether the sensing responder can perform monostatic sensing. For a relationship between a value and a meaning of the bit, refer to Table 1.

In another example, a value of the monostatic sensing bit is related to a value of a first bit in Table 5. For a relationship between a value and a meaning of the bit, refer to Table 2.

In still another example, a value of the monostatic sensing bit is related to a value of a second bit in Table 5. For a relationship between a value and a meaning of the bit, refer to Table 3.

In this embodiment of this application, the monostatic sensing bit is added in the SBP request frame, so that the SBP initiator can recommend the role of the sensing responder to the SBP responder.

As shown above, when a sensing apparatus performs monostatic sensing, a peer sensing apparatus may not receive a sensing PPDU sent by the sensing apparatus. As described above, the sounding indication information is shown by using an example in which the sounding indication information is carried in a sensing NDPA frame before the sensing PPDU. The following further provides a sensing communication method. NDP indication information may be carried in a sensing PPDU, and the NDP indication information may indicate whether the sensing PPDU is an NDP used for monostatic sensing.

For example, the NDP indication information may occupy 1 bit. For example, the NDP indication information may be carried in a monostatic (monostatic) field. For example, when a value of the field is 1, it indicates that the sensing PPDU is a monostatic sensing NDP; or if a value of the field is 0, it indicates that the sensing PPDU is not a monostatic sensing NDP. Therefore, after receiving the monostatic field, a peer sensing apparatus may learn of whether to continue to receive (or parse) a subsequent field in the sensing PPDU. For another example, when the value of the monostatic field is 0, the peer sensing apparatus may continue to receive (or parse) a subsequent field of the monostatic field; or when the value of the monostatic field is 1, the peer sensing apparatus may not continue to receive (or parse) a subsequent field of the monostatic field. Therefore, resources can be saved, power consumption can be reduced, and energy saving can be implemented.

For example, the NDP indication information may be carried in a monostatic field in a SIG field in the sensing PPDU. For a format of the sensing PPDU, refer to FIG. 1b to FIG. 1e. Details are not described herein again.

FIG. 1b is used as an example. The NDP indication information may be carried in at least one of the following in the sensing PPDU: L-SIG, RL-SIG, and HE-SIG-A. For example, a reserved bit in the foregoing fields indicates whether the sensing PPDU is used for monostatic sensing, or a part of bits may be reused for indication, which is not listed herein.

FIG. 1c is used as an example. The NDP indication information may be carried in at least one of the following in the sensing PPDU: L-SIG, RL-SIG, and HE-SIG-A. For example, a reserved bit in the foregoing fields may be used for indication, or a part of bits may be reused for indication.

FIG. 1d is used as an example. The NDP indication information may be carried in at least one of the following in the sensing PPDU: L-SIG, RL-SIG, U-SIG, and EHT-SIG. For example, a reserved bit in the fields may be used for indication, or a part of bits may be reused for indication.

FIG. 1e is used as an example. The NDP indication information may be carried in at least one of the following in the sensing PPDU: L-SIG, RL-SIG, U-SIG, and EHT-SIG. For example, a reserved bit in the fields may be used for indication, or a part of bits may be reused for indication.

It should be noted that a method for using the NDP indication information may be extended to any PPDU. If a sensing PPDU used by a sensing apparatus to perform monostatic sensing is not the foregoing listed NDP, the foregoing method may also be applied to another related monostatic sensing PPDU. For example, in addition to being carried in the foregoing fields in a PPDU PHY header (header), the NDP indication information may be carried in another field in the sensing PPDU PHY header, or a medium access control (medium access control, MAC) header (MAC header). Therefore, after receiving the NDP indication information, the sensing apparatus may learn that the PPDU is a monostatic PPDU, and does not need to continue receiving and decoding, thereby implementing energy saving.

The foregoing embodiments, implementations, examples, or the like may be independent embodiments, or may be combined with each other. The foregoing phases may be combined into a sensing procedure or an SBP procedure, or the foregoing phases, measurement exchanges, or the like each may be an independent embodiment. This is not limited in this embodiment of this application.

A communication apparatus provided in embodiments of this application is described below.

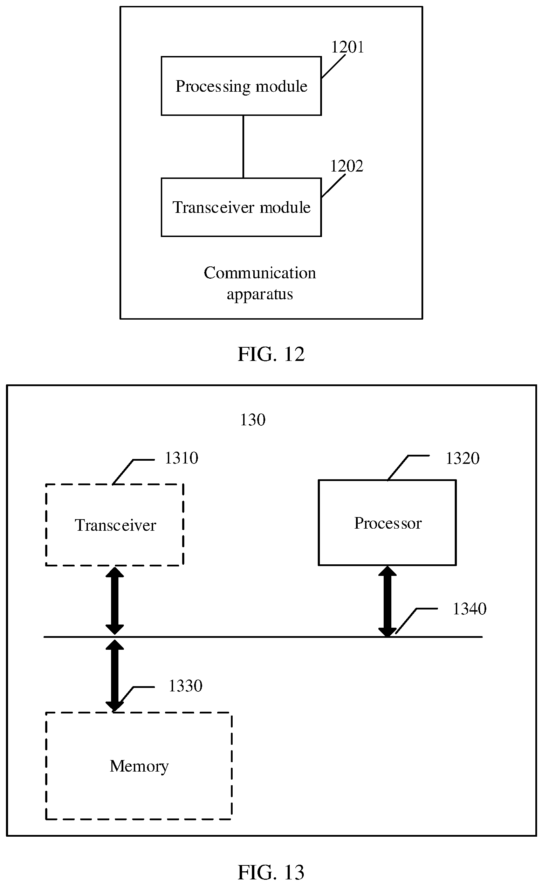

In this application, the communication apparatus may be divided into functional modules based on the method embodiments. For example, each functional module may be obtained through division based on each corresponding function, or two or more functions may be integrated into one processing module. The integrated module may be implemented in a form of hardware, or may be implemented in a form of a software functional module. It should be noted that, in this application, division into modules is an example, and is merely a logical functional division. In an actual implementation, another division manner may be used. The following describes in detail communication apparatuses in embodiments of this application with reference to FIG. 12 to FIG. 14.

The communication apparatus shown in embodiments of this application may also be referred to as a sensing apparatus, an apparatus, or the like.

FIG. 12 is a diagram of a structure of a communication apparatus according to an embodiment of this application. As shown in FIG. 12, the communication apparatus includes a processing module 1201 and a transceiver module 1202. The transceiver module 1202 may implement a corresponding communication function, and the processing module 1201 is configured to implement a corresponding processing function. For example, the transceiver module 1202 may also be referred to as an interface, a communication interface, or a communication module.

In some embodiments of this application, the communication apparatus may be configured to perform an action performed by the sensing initiator in the foregoing method embodiments. In this case, the sensing initiator may be a sensing device, or a chip, a functional module, or the like that may be configured in the device. The transceiver module 1202 is configured to perform receiving/sending-related operations of the sensing initiator in the foregoing method embodiments, and the processing module 1201 is configured to perform processing-related operations of the sensing initiator in the foregoing method embodiments.

For example, the processing module 1201 may be configured to: send or output a sensing measurement request frame, and receive or input a sensing measurement response frame, by using the transceiver module 1202. For example, the processing module 1201 may further generate the sensing measurement request frame, and parse the sensing measurement response frame.

For example, the processing module 1201 may further send or output a sensing sounding trigger frame by using the transceiver module 1202. For example, the processing module 1201 may be further configured to generate the sensing sounding trigger frame, or a sensing NDPA frame.

For example, the processing module 1201 may further send or output the sensing NDPA frame by using the transceiver module 1202.

For example, the processing module 1201 may further send (or output) first capability indication information or receive (or input) second capability indication information, by using the transceiver module 1202.

For example, the transceiver module 1202 may further receive or input an SBP request frame.

For example, the transceiver module 1202 may include a radio frequency module, and an antenna module. For example, the transceiver module 1202 may include a pin module.

Still as shown in FIG. 12, in some other embodiments of this application, the communication apparatus may be configured to perform an action performed by the sensing responder in the foregoing method embodiments. In this case, the communication apparatus may be a sensing device, or a chip, a functional module, or the like that may be configured in the device. The transceiver module 1202 is configured to perform receiving/sending-related operations of the sensing responder in the foregoing method embodiments, and the processing module 1201 is configured to perform processing-related operations of the sensing responder in the foregoing method embodiments.

For example, the transceiver module 1202 may be configured to: receive or input a sensing measurement request frame, and send or output a sensing measurement response frame. For example, the processing module 1201 may be configured to: parse the sensing measurement request frame, and generate the sensing measurement response frame.

For example, the transceiver module 1202 may be further configured to receive or input a sensing NDPA frame or a sensing sounding trigger frame. The processing module 1201 may parse the sensing NDPA frame, the sensing sounding trigger frame, or the like.

For example, the transceiver module 1202 may be further configured to: receive or input first capability indication information, and send or output second capability indication information.

For example, the transceiver module 1202 may be further configured to send or output an SBP request frame.

For example, the transceiver module 1202 may include a radio frequency module, and an antenna module. For example, the transceiver module 1202 may include a pin module.

Optionally, in the foregoing embodiments, the communication apparatus may further include a storage module. The storage module may be configured to store instructions and/or data. The processing module 1201 may read the instructions and/or the data in the storage module, so that the communication apparatus implements the foregoing method embodiments.

In the foregoing embodiments, for specific descriptions of terms or steps such as the sensing measurement request frame, the sensing measurement responder, the sensing NDPA frame, the sensing sounding trigger frame, the SBP request frame, the first capability indication information, the second capability indication information, the first NDP, the second NDP, and the third NDP, refer to the descriptions in the foregoing method embodiments. Details are not described herein again.

Specific descriptions of the transceiver module and the processing module shown in the foregoing embodiments are merely examples. For specific functions or steps performed by the transceiver module and the processing module, refer to the foregoing method embodiments. Details are not described herein again.

The foregoing describes the communication apparatus in embodiments of this application. The following describes a possible product form of the communication apparatus. Any form of product that has a function of the communication apparatus described in FIG. 12 falls within the protection scope of embodiments of this application. The following descriptions are merely examples, and a product form of the communication apparatus in embodiments of this application is not limited thereto.

In a possible implementation, in the communication apparatus shown in FIG. 12, the processing module 1201 may be one or more processors, and the transceiver module 1202 may be a transceiver; or the transceiver module 1202 may be a sending module and a receiving module, the sending module may be a transmitter, the receiving module may be a receiver, and the sending module and the receiving module are integrated into one device, for example, a transceiver. In embodiments of this application, the processor and the transceiver may be coupled, or the like. A manner of connection between the processor and the transceiver is not limited in embodiments of this application. In a process of performing the foregoing method, a process of sending information in the foregoing method may be a process of outputting the information by the processor. When outputting the information, the processor outputs the information to a transceiver, so that the transceiver transmits the information. After the information is output by the processor, other processing may further need to be performed on the information before the information arrives at the transceiver. Similarly, a process of receiving information in the foregoing method may be a process of receiving the input information by the processor. When the processor receives the input information, the transceiver receives the information and inputs the information to the processor. Further, after the transceiver receives the information, other processing may need to be performed on the information before the information is input into the processor.

FIG. 13 is a diagram of a structure of a communication apparatus according to an embodiment of this application. As shown in FIG. 13, a communication apparatus 130 includes one or more processors 1320 and a transceiver 1310.

In some embodiments of this application, the communication apparatus may be configured to perform steps, methods, or functions performed by the sensing initiator. For example, the processor 1320 may be configured to perform the functions or the steps implemented by the processing module 1201 shown in FIG. 12, and the transceiver 1310 may be configured to perform the functions or the steps implemented by the transceiver module 1202 shown in FIG. 12. For specific descriptions of the processor 1320 and the transceiver 1310, refer to FIG. 12 or the foregoing method embodiments. Details are not described herein again.

In some other embodiments of this application, the communication apparatus is configured to perform steps, methods, or functions performed by the sensing responder. For example, the processor 1320 may be configured to perform the functions or the steps implemented by the processing module 1201 shown in FIG. 12, and the transceiver 1310 may be configured to perform the functions or the steps implemented by the transceiver module 1202 shown in FIG. 12. For specific descriptions of the processor 1320 and the transceiver 1310, refer to FIG. 12 or the foregoing method embodiments. Details are not described herein again.

In implementations of the communication apparatus shown in FIG. 13, the transceiver may include a receiver and a transmitter, the receiver is configured to perform a receiving function (or operation), and the transmitter is configured to perform a transmitting function (or operation). In addition, the transceiver is configured to communicate with another device/apparatus through a transmission medium.

Optionally, the communication apparatus 130 may further include one or more memories 1330, configured to store program instructions and/or data. The memory 1330 is coupled to the processor 1320. The coupling in embodiments of this application may be an indirect coupling or a communication connection between communication apparatuses, units, or modules in an electrical form, a mechanical form, or another form, and is used for information exchange between the communication apparatuses, the units, or the modules. The processor 1320 may cooperate with the memory 1330. The processor 1320 may execute the program instructions stored in the memory 1330. Optionally, at least one of the one or more memories may be included in the processor.

A specific connection medium between the transceiver 1310, the processor 1320, and the memory 1330 is not limited in this embodiment of this application. In this embodiment of this application, in FIG. 13, the memory 1330, the processor 1320, and the transceiver 1310 are connected to each other through a bus 1340. The bus is represented by using a bold line in FIG. 13. A manner of connection between other components is only schematically described, but is not used as a limitation. The bus may be classified into an address bus, a data bus, a control bus, and the like. For ease of representation, only one bold line is used for representation in FIG. 13, but this does not mean that there is only one bus or only one type of bus.

In this embodiment of this application, the processor may be a general-purpose processor, a digital signal processor, an application-specific integrated circuit, a field programmable gate array or another programmable logic device, a discrete gate or transistor logic device, a discrete hardware component, or the like. The processor can implement or execute the methods, the steps, and the logical block diagrams disclosed in embodiments of this application. The general-purpose processor may be a microprocessor, any conventional processor, or the like. The steps of the methods disclosed in combination with embodiments of this application may be directly implemented by a hardware processor, or may be implemented by using a combination of hardware and software modules in the processor, or the like.

In this embodiment of this application, the memory may include but is not limited to a nonvolatile memory such as a hard disk drive (hard disk drive, HDD) or a solid-state drive (solid-state drive, SSD), a random access memory (Random Access Memory, RAM), an erasable programmable read-only memory (Erasable Programmable ROM, EPROM), a read-only memory (Read-Only Memory, ROM), or a portable read-only memory (Compact Disc Read-Only Memory, CD-ROM). The memory is any storage medium that can be used to carry or store program code in a form of an instruction or a data structure and that can be read and/or written by a computer (for example, the communication apparatus shown in this application). However, this is not limited thereto. The memory in this embodiment of this application may alternatively be a circuit or any other apparatus that can implement a storage function, and is configured to store the program instructions and/or the data.

The processor 1320 is mainly configured to: process a communication protocol and communication data, control the entire communication apparatus, execute a software program, and process data of the software program. The memory 1330 is mainly configured to store the software program and the data. The transceiver 1310 may include a control circuit and an antenna. The control circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, such as a touchscreen, a display, or a keyboard, is mainly configured to: receive data input by a user and output data to the user.

After the communication apparatus is powered on, the processor 1320 may read a software program in the memory 1330, explain and execute instructions of the software program, and process data of the software program. When data needs to be sent in a wireless manner, after performing baseband processing on to-be-sent data, the processor 1320 outputs a baseband signal to the radio frequency circuit. After performing radio frequency processing on the baseband signal, the radio frequency circuit sends a radio frequency signal through an antenna in a form of an electromagnetic wave. When data is sent to the communication apparatus, the radio frequency circuit receives the radio frequency signal through the antenna, converts the radio frequency signal into a baseband signal, and outputs the baseband signal to the processor 1320. The processor 1320 converts the baseband signal into data and processes the data.

In another implementation, the radio frequency circuit and the antenna may be disposed independent of the processor that performs baseband processing. For example, in a distributed scenario, the radio frequency circuit and the antenna may be disposed remotely and independent of the communication apparatus.

The communication apparatus shown in embodiments of this application may further have more components than those in FIG. 13, or the like. This is not limited in embodiments of this application. The methods performed by the processor and the transceiver are merely examples. For specific steps performed by the processor and the transceiver, refer to the methods described above.

In another possible implementation, in the communication apparatus shown in FIG. 12, the processing module 1201 may be one or more logic circuits, and the transceiver module 1202 may be an input/output interface that is also referred to as a communication interface, an interface circuit, an interface, or the like. Alternatively, the transceiver module 1202 may be a sending module and a receiving module. The sending module may be an output interface, and the receiving module may be an input interface. The sending module and the receiving module are integrated into one module, for example, an input/output interface.

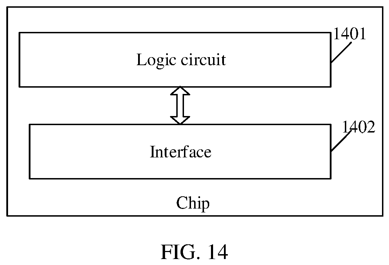

FIG. 14 is a diagram of a structure of a communication apparatus according to an embodiment of this application. As shown in FIG. 14, the communication apparatus shown in FIG. 14 includes a logic circuit 1401 and an interface 1402. In other words, the processing module 1201 may be implemented through the logic circuit 1401, and the transceiver module 1202 may be implemented through the interface 1402. The logic circuit 1401 may be a chip, a processing circuit, an integrated circuit, a system on chip (system on chip, SoC), or the like. The interface 1402 may be a communication interface, an input/output interface, a pin, or the like. For example, FIG. 14 shows an example in which the communication apparatus is a chip. The chip includes the logic circuit 1401 and the interface 1402.

In this embodiment of this application, the logic circuit and the interface may be coupled to each other. A specific manner of connection between the logic circuit and the interface is not limited in this embodiment of this application. For example, the logic circuit 1401 may be configured to perform the functions or the steps implemented by the processing module 1201 shown in FIG. 12, and the interface 1402 may be configured to perform the functions or the steps implemented by the transceiver module 1202 shown in FIG. 12. For specific descriptions of the logic circuit 1401 and the interface 1402, refer to FIG. 12 or the foregoing method embodiments. Details are not described herein again.

The communication apparatus shown in embodiments of this application may implement the methods according to embodiments of this application in a form of hardware, or may implement the methods according to embodiments of this application in a form of software. This is not limited in embodiments of this application.

An embodiment of this application further provides a communication system. The communication system includes a sensing initiator and a sensing responder. The sensing initiator and the sensing responder may be configured to perform the method in the foregoing embodiments.

In addition, this application further provides a computer program. The computer program is configured to implement operations and/or processing performed by communication apparatuses in the method provided in this application.

This application further provides a computer-readable storage medium. The computer-readable storage medium stores computer code. When the computer code is run on a computer, the computer is enabled to perform operations and/or processing performed by the communication apparatuses in the methods provided in this application.

This application further provides a computer program product. The computer program product includes computer code or a computer program. When the computer code or the computer program is run on a computer, operations and/or processing performed by the communication apparatuses in the methods provided in this application are/is performed.

In the several embodiments provided in this application, it should be understood that the disclosed system, communication apparatus, and method may be implemented in other manners. For example, the described communication apparatus embodiments are merely examples. For example, division into modules is merely logical functional division. In an actual implementation, another division manner may be used. For example, a plurality of modules or components may be combined or integrated into another system, or some features may be ignored or not performed. In addition, the displayed or discussed mutual couplings or direct couplings or communication connections may be implemented through some interfaces. The indirect couplings or communication connections between the communication apparatuses or modules may be implemented in electronic, mechanical, or other forms.

The modules described as separate parts may or may not be physically separate, and parts displayed as modules may or may not be physical modules, may be located in one position, or may be distributed on a plurality of network modules. Some or all of the modules may be selected based on an actual requirement to achieve the technical effects of the solutions provided in embodiments of this application.

In addition, functional modules in embodiments of this application may be integrated into one processing module, or each of the modules may exist alone physically, or two or more modules may be integrated into one module. The integrated module may be implemented in a form of hardware, or may be implemented in a form of a software functional module.

When the integrated module is implemented in the form of a software functional module and sold or used as an independent product, the integrated unit may be stored in a computer-readable storage medium. Based on such an understanding, the technical solutions of this application essentially, or the part contributing to the conventional technologies, or all or some of the technical solutions may be implemented in a form of a software product. The computer software product is stored in a readable storage medium and includes a plurality of instructions for instructing a computer device (which may be a personal computer, a server, or a network device) to perform all or some of the steps of the methods described in embodiments of this application. The readable storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A sensing communication method, wherein the method is applied to a sensing initiator, and the method comprises:
sending a sensing measurement request frame, wherein the sensing measurement request frame comprises a sensing measurement parameters element, the sensing measurement parameters element comprises monostatic indication information, sensing transmitter indication information, and sensing receiver indication information, the monostatic indication information indicates whether a sensing responder performs monostatic sensing, the sensing transmitter indication information indicates whether the sensing responder is a sensing transmitter, and the sensing receiver indication information indicates whether the sensing responder is a sensing receiver; and
receiving a sensing measurement response frame of the sensing measurement request frame.

2. The method according to claim 1, wherein if the sensing transmitter indication information indicates that the sensing responder is a sensing transmitter, when a value of the monostatic indication information is a first value, it indicates that the sensing responder performs monostatic sensing, or when a value of the monostatic indication information is a second value, it indicates that the sensing responder does not perform monostatic sensing; or
if the sensing receiver indication information indicates that the sensing responder is a sensing receiver, when a value of the monostatic indication information is a first value, it indicates that the sensing responder performs monostatic sensing, or when a value of the monostatic indication information is a second value, it indicates that the sensing responder does not perform monostatic sensing.

3. The method according to claim 1 or 2, wherein after the sending the sensing measurement request frame, the method further comprises:
sending a sensing null data packet announcement NDPA frame, wherein the sensing NDPA frame comprises sounding indication information, and the sounding indication information indicates whether the sensing responder needs to receive a sensing physical layer convergence procedure protocol data unit PPDU, or the sounding indication information indicates whether the sensing responder needs to estimate channel state information CSI, or the sounding indication information indicates whether the sensing responder needs to report channel state information CSI.

4. The method according to claim 3, wherein the sensing NDPA frame further comprises the monostatic indication information.

5. The method according to any one of claims 1 to 4, wherein after the sending the sensing measurement request frame, the method further comprises:
sending a sensing sounding trigger frame, wherein the sensing sounding trigger frame comprises the monostatic indication information.

6. The method according to claim 5, wherein a user information field in the sensing sounding trigger frame comprises the monostatic indication information; or
a common information field in the sensing sounding trigger frame comprises the monostatic indication information, the common information field further comprises a measurement session identifier ID, and the measurement session ID indicates a sensing measurement session corresponding to monostatic sensing performed by the sensing responder; or
a transmitter user information field or a receiver user information field in the sensing sounding trigger frame comprises the monostatic indication information.

7. The method according to any one of claims 1 to 4, wherein after the sending the sensing measurement request frame, the method further comprises:
sending a sensing sounding trigger frame, wherein the sensing sounding trigger frame is used to schedule each of a plurality of sensing responders participating in a sensing measurement exchange to perform monostatic sensing.

8. The method according to claim 7, wherein the sensing sounding trigger frame comprises a sensing trigger subtype field, and a value of the sensing trigger subtype field is 5.

9. The method according to any one of claims 1 to 8, wherein before the sending the sensing measurement request frame, the method further comprises:
sending first capability indication information, wherein the first capability indication information indicates whether the sensing initiator supports monostatic sensing; and
receiving second capability indication information, wherein the second capability indication information indicates whether the sensing responder supports monostatic sensing.

10. The method according to any one of claims 1 to 9, wherein the sensing initiator comprises an access point AP, and before the sending the sensing measurement request frame, the method further comprises:
receiving a sensing by proxy SBP request frame, wherein the SBP request frame comprises the monostatic indication information.

11. The method according to claim 10, wherein the SBP request frame comprises an SBP parameters element, the SBP parameters element comprises a sensing responder role bitmap, a first bit in the sensing responder bitmap indicates whether the sensing responder is a sensing transmitter, a second bit in the sensing responder role bitmap indicates whether the sensing responder is a sensing receiver, and a third bit in the sensing role bitmap indicates whether the sensing responder performs monostatic sensing.

12. The method according to any one of claims 1 to 11, wherein the method further comprises:
sending a first NDP, wherein a signaling SIG field of the first NDP comprises NDP indication information, and the NDP indication information indicates whether the first NDP is an NDP used for monostatic sensing; or
receiving a second NDP, wherein a signaling SIG field of the second NDP comprises NDP indication information, and the NDP indication information indicates whether the second NDP is an NDP used for monostatic sensing.

13. A sensing communication method, wherein the method is applied to a sensing responder, and the method comprises:
receiving a sensing measurement request frame, wherein the sensing measurement request frame comprises a sensing measurement parameters element, the sensing measurement parameters element comprises monostatic indication information, sensing transmitter indication information, and sensing receiver indication information, the monostatic indication information indicates whether the sensing responder performs monostatic sensing, the sensing transmitter indication information indicates whether the sensing responder is a sensing transmitter, and the sensing receiver indication information indicates whether the sensing responder is a sensing receiver; and
sending a sensing measurement response frame of the sensing measurement request frame.

14. The method according to claim 13, wherein if the sensing transmitter indication information indicates that the sensing responder is a sensing transmitter, when a value of the monostatic indication information is a first value, it indicates that the sensing responder performs monostatic sensing, or when a value of the monostatic indication information is a second value, it indicates that the sensing responder does not perform monostatic sensing; or
if the sensing receiver indication information indicates that the sensing responder is a sensing receiver, when a value of the monostatic indication information is a first value, it indicates that the sensing responder performs monostatic sensing, or when a value of the monostatic indication information is a second value, it indicates that the sensing responder does not perform monostatic sensing.

15. The method according to claim 13 or 14, wherein that the sensing responder performs monostatic sensing comprises:
sending, by the sensing responder, a sensing physical layer convergence procedure protocol data unit PPDU, and receiving a reflected signal of the sensing PPDU; and
estimating channel state information CSI based on the reflected signal.

16. The method according to any one of claims 13 to 15, wherein after the receiving the sensing measurement request frame, the method further comprises:
receiving a sensing null data packet announcement NDPA frame, wherein the sensing NDPA frame comprises sounding indication information, and the sounding indication information indicates whether the sensing responder needs to receive the sensing physical layer convergence procedure protocol data unit PPDU, or the sounding indication information indicates whether the sensing responder needs to estimate the channel state information CSI, or the sounding indication information indicates whether the sensing responder needs to report the channel state information CSI.

17. The method according to claim 16, wherein the sensing NDPA frame further comprises the monostatic indication information.

18. The method according to any one of claims 13 to 17, wherein after the receiving the sensing measurement request frame, the method further comprises:
receiving a sensing sounding trigger frame, wherein the sensing sounding trigger frame comprises the monostatic indication information.

19. The method according to claim 18, wherein a user information field in the sensing sounding trigger frame comprises the monostatic indication information; or
a common information field in the sensing sounding trigger frame comprises the monostatic indication information, the common information field further comprises a measurement session identifier ID, and the measurement session ID indicates a sensing measurement session corresponding to monostatic sensing performed by the sensing responder; or
a transmitter user information field or a receiver user information field in the sensing sounding trigger frame comprises the monostatic indication information.

20. The method according to any one of claims 13 to 17, wherein after the receiving the sensing measurement request frame, the method further comprises:
receiving a sensing sounding trigger frame, wherein the sensing sounding trigger frame is used to schedule each of a plurality of sensing responders participating in a sensing measurement exchange to perform monostatic sensing.

21. The method according to claim 20, wherein the sensing sounding trigger frame comprises a sensing trigger subtype field, and a value of the sensing trigger subtype field is 5.

22. The method according to any one of claims 13 to 21, wherein before the receiving the sensing measurement request frame, the method further comprises:
receiving first capability indication information, wherein the first capability indication information indicates whether a sensing initiator supports monostatic sensing; and
sending second capability indication information, wherein the second capability indication information indicates whether the sensing responder supports monostatic sensing.

23. The method according to any one of claims 13 to 22, wherein the sensing responder comprises a station STA, and before the receiving the sensing measurement request frame, the method further comprises:
sending a sensing by proxy SBP request frame, wherein the SBP request frame comprises the monostatic indication information.

24. The method according to claim 23, wherein the SBP request frame comprises an SBP parameters element, the SBP parameters element comprises a sensing responder role bitmap, a first bit in the sensing responder bitmap indicates whether the sensing responder is a sensing transmitter, a second bit in the sensing responder role bitmap indicates whether the sensing responder is a sensing receiver, and a third bit in the sensing role bitmap indicates whether the sensing responder performs monostatic sensing.

25. The method according to any one of claims 13 to 24, wherein the method further comprises:
receiving a first NDP, wherein a signaling SIG field of the first NDP comprises NDP indication information, and the NDP indication information indicates whether the first NDP is an NDP used for monostatic sensing; or
sending a second NDP, wherein a signaling SIG field of the second NDP comprises NDP indication information, and the NDP indication information indicates whether the second NDP is an NDP used for monostatic sensing.

26. A communication apparatus, comprising a module configured to perform the method according to any one of claims 1 to 25.

27. A communication apparatus, comprising a processor, wherein the processor is configured to perform the method according to any one of claims 1 to 25.

28. A communication apparatus, comprising a logic circuit and an interface, wherein the logic circuit is coupled to the interface; and
the interface is configured to input and/or output information, and the logic circuit is configured to perform the method according to any one of claims 1 to 25.

29. A computer-readable storage medium, wherein the computer-readable storage medium is configured to store a computer program, and when the computer program is executed, the method according to any one of claims 1 to 25 is performed.

30. A computer program product, wherein when the computer program product is executed, the method according to any one of claims 1 to 25 is performed.

31. A communication system, comprising a sensing initiator and a sensing responder, wherein the sensing initiator is configured to perform the method according to any one of claims 1 to 12, and the sensing responder is configured to perform the method according to any one of claims 13 to 25.
